# EUROPEAN PATENT APPLICATION

(11) **EP 2 322 482 A1**
(43) Date of publication of application: **18.05.2011**
(21) Application number: 09811442.4
(22) Date of filing: 27.08.2009
(51) Int. Cl.: C01G 37/00, C23C 22/48, C25D 3/06, C25D 3/10

(54) **CHROMIUM(III)-CONTAINING AQUEOUS SOLUTION AND PROCESS FOR PRODUCTION OF SAME**

(30) Priority: 05.09.2008 JP 2008229099; 05.09.2008 JP 2008229100; 05.09.2008 JP 2008229101
(71) Applicant: Nippon Chemical Industrial Co., Ltd., Koto-ku, Tokyo 136-8515 (JP)
(72) Inventor: BANDA Tomohiro, Shunan-shi Yamaguchi 745-0024 (JP); KUWANO Hiroyuki, Shunan-shi Yamaguchi 745-0024 (JP)
(74) Representative: Becker Kurig Straus
(86) International application number: PCT/JP2009/064961
(87) International publication number: WO 2010/026916

(57) **Abstract**

It is intended to provide a chromium (III)-containing aqueous solution which has widely adjustable molar ratios of various acid radicals to Cr and is useful as a source of trivalent chromium or a supplementary source of trivalent chromium for the bath in the surface treatment of various metals. Specifically, the chromium (III)-containing aqueous solution is **characterized by** containing a complex chromium (III) salt which is produced by performing chromic acid reduction reaction in the simultaneous or sequential presence of two or more acids selected from an inorganic acid other than chromic acid and an organic acid. Furthermore, it is intended to provide a process for producing a chromium (III)-containing aqueous solution by performing chromic acid reduction reaction by the contact of chromic acid with an acid other than chromic acid and/or an organic reducing agent in a water solvent, **characterized in that** the chromic acid reduction reaction is performed in the simultaneous or sequential presence of at least two or more acids selected as the acid other than chromic acid from an inorganic acid and an organic acid.

## Description

### Technical Field

The present invention relates to a chromium (III)-containing aqueous solution, which is useful for chromium plating or metal surface treatment, such as trivalent chromium chemical conversion treatment, and to a process for producing the same.

### Background Art

An aqueous solution of an inorganic acid chromium (III) salt or an organic acid chromium (III) salt (hereinafter, chromium means trivalent chromium unless otherwise specified) is used, as a chromium plating solution, for the surface treatment of various metals. Also, the aqueous solution is used for trivalent chromium chemical conversion treatment for zinc plating, tin plating, and the like.

For example, chromium chloride, chromium nitrate, or chromium phosphate is actively used as a source of chromium (III) for surface treatment. Also, the use of an organic acid chromium salt, such as chromium acetate and chromium oxalate, is proposed.

For example, chromium phosphate is used in a treatment liquid for forming a chemical conversion coating on the zinc plated-surfaces of various metals, such as iron, nickel, and copper. This chromium phosphate used in a treatment liquid for forming a chemical conversion coating has the composition Cr(H₃₋₃/ₘPO₄)ₘ, wherein m is in the range of 2 ≤ m ≤ 3 (see Patent Documents 1 and 2). This is because when m is less than 2, gelation easily occurs, and the resulting chromium phosphate cannot be used in the form of an aqueous solution.

For the bath in chromium plating or metal surface treatment, such as trivalent chromium chemical conversion treatment, whose source of trivalent chromium is chromium phosphate, a solution having a PO₄/Cr molar ratio less than 2 may be required as a supplementary source of trivalent chromium when the composition ratio of phosphoric acid to Cr is out of balance during use. Also, for the bath in metal surface treatment, chromium phosphate may be used in combination with an organic acid chromium salt, such as chromium acetate and chromium oxalate, or in combination with an inorganic acid chromium salt, such as chromium nitrate, chromium chloride, and chromium sulfate, as a source of trivalent chromium. In such a case, various sources of chromium (III) appropriate to the composition of the bath may be required.

As a method for obtaining the solution having a PO₄/Cr molar ratio less than 2, Patent Document 3 described below proposes a method in which phosphoric acid is added to an aqueous solution of basic chromium nitrate. However, this method has problems that a hydroxyl group in the basic chromium nitrate, or a water molecule coordinated to the chromium atom is difficult to substitute with a phosphoric acid ion, and therefore, free phosphoric acid remains in the solution or a long time is required for the substitution, and that even if the solution is used as a source of trivalent chromium or a supplementary source of trivalent chromium for the bath in metal surface treatment, it hardly offers a product excellent in luster.

As a problem of the conventional plating bath containing trivalent chromium, Patent Document 4 mentions that sufficient covering power cannot be obtained due to the insufficient complexation of a complexing agent with a chromium salt immediately after the initial make-up of the bath. As a method for mending this problem, the document discloses that a stable chromium complex solution is obtained by mixing a trivalent chromium compound and aqueous aliphatic carboxylic acid or a salt thereof and sufficiently aging the mixture under heating. However, this method is also a less-than-sufficient method for rapidly obtaining a stable plating bath containing trivalent chromium and has a problem of poor practicality.

### Citation List

### Patent Documents

Patent Document 1: Japanese Patent Laid-Open No. 2007-204352
Patent Document 2: US2007/0086938A1
Patent Document 3: Japanese Patent Laid-Open No. 2003-286584
Patent Document 4: Japanese Patent Laid-Open No. 2009-35806

### Summary of the Invention

### Problems to be Solved by the Invention

Thus, the present invention has been made for solving the problems as described above. Specifically, it is an object of the present invention to provide a chromium (III)-containing aqueous solution, which has widely adjustable molar ratios of various acid radicals to Cr and is useful as a source of trivalent chromium or a supplementary source of trivalent chromium for the bath in chromium plating or the surface treatment of various metals, such as trivalent chromium chemical conversion treatment. It is further an object of the present invention to provide a process for industrially efficiently and stably obtaining the chromium (III)-containing aqueous solution.

### Means for Solving the Problems

Thus, the present inventors have conducted diligent studies to attain the object and consequently found that a chromium (III)-containing aqueous solution containing a complex chromium (III) salt which is produced by performing chromic acid reduction reaction in the simultaneous or sequential presence of two or more acids selected from an inorganic acid other than chromic acid and an organic acid has widely adjustable molar ratios of various acid radicals to Cr. Also, the present inventors have found that, using the chromium (III)-containing aqueous solution of the present invention containing a chromium (III) salt complexed rapidly and stably, a product excellent in luster can be obtained by metal surface treatment. Based on these findings, the present invention has been completed.

Specifically, the present invention provides a chromium (III)-containing aqueous solution characterized by containing a complex chromium (III) salt which is obtained by performing chromic acid reduction reaction in the simultaneous or sequential presence of at least two or more acids selected from an inorganic acid other than chromic acid and an organic acid in an aqueous solution containing chromic acid.

Also, the present invention provides a process for producing a chromium (III)-containing aqueous solution by performing chromic acid reduction reaction by the contact of chromic acid with an acid other than chromic acid and/or an organic reducing agent in a water solvent, characterized in that the chromic acid reduction reaction is performed in the simultaneous or sequential presence of at least two or more acids selected as the acid from an inorganic acid other than chromic acid and an organic acid.

### Advantages of the Invention

A chromium (III)-containing aqueous solution of the present invention has widely adjustable molar ratios of various acid radicals to Cr. Using the aqueous solution, a product excellent in luster can be obtained by metal surface treatment. According to a production process of the present invention, the aqueous solution can be provided in an industrially advantageous manner.

### Brief Description of the Drawings

Figure 1 is a measurement diagram of the charge distribution of a chromium (III)-containing aqueous solution obtained in Example 1;
Figure 2 is a measurement diagram of the charge distribution of a chromium (III)-containing aqueous solution obtained in Example 3;
Figure 3 is a measurement diagram of the charge distribution of a chromium (III)-containing aqueous solution obtained in Comparative Example 1;
Figure 4 is a measurement diagram of the charge distribution of a chromium (III)-containing aqueous solution obtained in Comparative Example 3;
Figure 5 is a measurement diagram of the charge distribution of a chromium (III)-containing aqueous solution obtained in Example 7;
Figure 6 is a measurement diagram of the charge distribution of a chromium (III)-containing aqueous solution obtained in Example 10;
Figure 7 is a measurement diagram of the charge distribution of a chromium (III)-containing aqueous solution obtained in Comparative Example 6;
Figure 8 is a measurement diagram of the charge distribution of a chromium (III)-containing aqueous solution obtained in Comparative Example 9;
Figure 9 is a measurement diagram of the charge distribution of a chromium (III)-containing aqueous solution obtained in Example 12;
Figure 10 is a measurement diagram of the charge distribution of a chromium (III)-containing aqueous solution obtained in Example 14;
Figure 11 is a measurement diagram of the charge distribution of a chromium (III)-containing aqueous solution obtained in Comparative Example 11; and
Figure 12 is a measurement diagram of the charge distribution of a chromium (III)-containing aqueous solution obtained in Comparative Example 13.

### Description of Embodiments

The present invention will be described below in detail, based on the preferred embodiments of the present invention.

### (Chromium (III)-Containing Aqueous Solution)

The chromium (III)-containing aqueous solution of the present invention contains a complex chromium (III) salt which is obtained by performing chromic acid reduction reaction in the simultaneous or sequential presence of at least two or more acids selected from an inorganic acid other than chromic acid and an organic acid in an aqueous solution containing chromic acid.

In the present invention, three different chromium (III)-containing aqueous solutions containing a complex chromium (III) salt can be obtained, based on combinations of the inorganic acid other than chromic acid and the organic acid used. Specifically, a chromium (III)-containing aqueous solution containing
[1] a complex chromium (III) salt which is obtained by the combination of phosphoric acid used as an inorganic acid, and an organic acid,
[2] a complex chromium (III) salt which is obtained by the combination of an inorganic acid other than chromic acid and phosphoric acid, and an organic acid, or
[3] a complex chromium (III) salt which is obtained by the combination of phosphoric acid and an inorganic acid other than chromic acid and phosphoric acid can be obtained.

First, the chromium (III)-containing aqueous solution containing the complex chromium (III) salt [1], that is, the complex chromium (III) salt which is obtained by the combination of phosphoric acid used as an inorganic acid, and an organic acid, will be described.

The chromium (III)-containing aqueous solution of the embodiment [1] is a chromium (III)-containing aqueous solution containing a complex chromium (III) salt of at least a phosphoric acid radical and an organic acid radical, wherein the chromium (III)-containing aqueous solution contains at least a phosphoric acid radical and an organic acid radical, has a PO₄/Cr molar ratio of 3 or less, and contains substantially no hexavalent chromium, and the chromium (III)-containing aqueous solution is produced by performing chromic acid reduction reaction in the simultaneous or sequential presence of at least phosphoric acid and an organic acid.

In the present invention, the phrase "substantially no hexavalent chromium." refers to the absence of Cr⁶⁺ emission in a diphenylcarbazide method.

The reaction according to the embodiment [1] is usually started by the contact of chromic acid with an acid other than chromic acid and/or an organic reducing agent in a water solvent. In the embodiment [1], the phrase "simultaneous presence of phosphoric acid and an organic acid" refers to a state in which from the start of the reaction to the completion of the reaction, the phosphoric acid and the organic acid added to the water solvent remain unreacted, while they are reacted with chromium (III) by the addition of an organic reducing agent or an organic acid having reduction effect. On the other hand, the phrase "sequential presence of phosphoric acid and an organic acid" refers to a state in which the initially added acid is completely reacted with chromium (III), and in the substantial absence of the unreacted acid, the other type of acid is added for its presence in the water solvent.

The chromium (III)-containing aqueous solution of the embodiment [1] is a solution in which a complex chromium (III) salt having at least a phosphoric acid radical and an organic acid radical bonded to the chromium atom, represented by the following composition formula (1):

[Formula 1] **Cr*ₖ*(OH)*₁*(H₂PO₄)*m₁*(HPO*₄*)*m₂*(A₁*^{x₁}*)*n₁*(A₂*^{x₂}*)*n₂* ··· (Aᵢ*^{x₁}*) *n₁*** (1)

wherein A₁, A₂, ..., Aᵢ represent an organic acid radical, which is an acid residue obtained by removing a proton from an organic acid; x₁, x₂, ..., xᵢ represent a charge; and k, 1, m₁, m₂, n₁, n₂, ..., nᵢ satisfy 3k - 1 - m₁- 2m₂ + x₁n₁ + x₂n₂ + ... xᵢnᵢ = 0 is dissolved in water. The phosphoric acid radical bonded to the chromium atom is H₂PO₄⁻ and/or HPO₄²⁻, and the ratio of the H₂PO₄⁻ and HPO₄²⁻ is arbitrarily changed by the reaction conditions, the raw material system, and the like. On the other hand, the organic acid radical bonded to the chromium atom is an acid residue obtained by removing a proton from the organic acid.

The organic acid is represented by R(COOH)_{y}, wherein R represents an organic group, a hydrogen atom, or a single bond or a double bond; and y represents the number of carboxyl groups in the organic acid and is an integer of 1 or more. The organic acid radical applied to A₁^{x1}, A₂^{x2},..., Aᵢ^{xi} in the composition formula (1) is represented by R(COO⁻)_{y}. When R is an organic group, the organic group is preferably an aliphatic group having 1 to 10 carbon atoms, particularly 1 to 5 carbon atoms. This aliphatic group may be substituted with other functional groups, for example, a hydroxyl group. Both of a saturated aliphatic group and an unsaturated aliphatic group can be used as the aliphatic group.

The number of carboxyl groups in the organic acid may be 1 or may be 2 or more. In other words, the organic acid may be monocarboxylic acid or may be polycarboxylic acid. Preferably, the number of carboxyl groups in the organic acid is 1 to 3.

Preferable organic acids are classified into the following groups (a) to (c):
(a) organic acids, for example, formic acid, acetic acid, glycolic acid, lactic acid, and gluconic acid, in which the residue other than carboxyl groups is a hydrogen atom or a saturated aliphatic group having 1 to 5 carbon atoms, particularly 1 or 2 carbon atoms, which may be substituted with a hydroxyl group, and the number of carboxyl groups is 1,
(b) organic acids, for example, oxalic acid, maleic acid, malonic acid, malic acid, tartaric acid, and succinic acid, in which the residue other than carboxyl groups is a single bond or a double bond, or a saturated aliphatic group having 1 or 2 carbon atoms or a unsaturated aliphatic group having 2 carbon atoms, which may be substituted with a hydroxyl group, and the number of carboxyl groups is 2, and
(c) organic acids, for example, citric acid, in which the residue other than carboxyl groups is a saturated aliphatic group having 1 to 3 carbon atoms, which may be substituted with a hydroxyl group, and the number of carboxyl groups is 3.

In the embodiment [1], the phosphoric acid radical in the composition formula of the complex chromium (III) salt is represented by PO₄, while the organic acid radical is represented by R(COO)_{y}, wherein y represents the number of carboxyl groups in the organic acid and is an integer of 1 or more.

In the embodiment [1], the ratio of the organic acid radical to the phosphoric acid radical is not particularly limited as long as it falls within the range specified by the composition formula (1) of the complex chromium (III) salt. The ratio is preferably a ratio that offers a PO₄/Cr molar ratio less than 2, since the resulting aqueous solution having a PO₄/Cr molar ratio less than 2 is advantageous.

The chromium (III)-containing aqueous solution of the embodiment [1] may further contain at least one or two or more inorganic acid radicals selected from hydrochloric acid, nitric acid, and sulfuric acid in the composition formula (1). When the inorganic acid radical(s) are contained, an inorganic acid radical, which is an acid residue obtained by removing a proton from an inorganic acid selected from hydrochloric acid, nitric acid, and sulfuric acid, is applied to A₁, A₂, ..., Aᵢ in the composition formula (1) as a substitute for a portion of the organic acid radical.

The concentration of the complex chromium (III) salt in the chromium (III)-containing aqueous solution of the embodiment [1] is 3% by weight or more, preferably 4% by weight or more, in terms of Cr. This concentration is appropriately adjusted according to specific use of the chromium (III)-containing aqueous solution. The concentration of the chromium (III) salt can be determined, without particular limitation, by, for example, potentiometric titration after oxidation of chromium (III) to chromium (IV).

In the chromium (III)-containing aqueous solution of the embodiment [1], preferably, free phosphoric acid or organic acids are substantially absent. In the present invention, the phrase "free acids are substantially absent" means that the stoichiometric ratio represented by the composition formula (1) of the obtained complex chromium (III) salt is satisfied within the range of a measurement error.

The chromium (III)-containing aqueous solution of the embodiment [1] has widely adjustable molar ratios of the phosphoric acid radical to Cr. Particularly a chromium (III)-containing aqueous solution having a PO₄/Cr molar ratio less than 2 can also be provided. Such a chromium (III)-containing aqueous solution is suitably used, as a chromium plating solution, for the surface treatment of various metals. For example, the chromium (III)-containing aqueous solution is used for final finish plating for decoration and for plating provided as a layer on nickel plating. Also, the chromium (III)-containing aqueous solution is suitably used for the trivalent chromium chemical conversion treatment of zinc plating, tin plating, and the like. The chromium (III)-containing aqueous solution of the embodiment [1] is particularly suitably used as a source of trivalent chromium or a supplementary source of trivalent chromium for the bath in chromium plating or metal surface treatment, such as trivalent chromium chemical conversion treatment. For the bath in metal surface treatment whose source of trivalent chromium is an aqueous solution of chromium phosphate, the chromium (III)-containing aqueous solution can be suitably used as a supplementary source of trivalent chromium when the composition ratio of phosphoric acid to Cr is out of balance during use. In addition, by selecting the type of the organic acid to be reacted, the chromium (111)-containing aqueous solution can be suitably used as a supplementary source of trivalent Cr for, for example, the bath whose source of trivalent chromium is an organic acid chromium salt, the bath whose source of trivalent chromium is both of chromium phosphate and an organic acid chromium salt, and the bath containing chromium phosphate and an organic acid. Also, the chromium (III)-containing aqueous solution containing a phosphoric acid radical, an organic acid radical, and if necessary an inorganic acid radical other than the phosphoric acid radical can be widely adapted to the combined use with an inorganic acid chromium salt such as chromium nitrate, chromium chloride, and chromium sulfate, in addition to the above uses. The "trivalent chromium chemical conversion treatment" in this specification refers to treatment in which a material to be treated is brought into contact with an aqueous solution containing a trivalent chromium salt as the main component to chemically produce a coating containing trivalent chromium on the material to be treated.

Then, the chromium (III)-containing aqueous solution containing the complex chromium (III) salt [2], that is, the complex chromium (III) salt which is obtained by the combination of an inorganic acid other than chromic acid and phosphoric acid, and an organic acid, will be described.

The chromium (III)-containing aqueous solution of the embodiment [2] is a solution in which a complex chromium (III) salt having two or more acid radicals bonded to the chromium atom, represented by the following composition formula (2):

[Formula 2] **Cr*ₖ*(OH)*₁*(B₁*^{x₁}*)(B₁*^{x₁}*)*m₁*-(B*₂^{x₂}*)*m₂* ... (B₁*^{x₁}*)*m₁*** (2)

wherein B₁, B₂, ..., Bᵢ represent two or more acid radicals derived from the inorganic acid other than chromic acid and the organic acid, provided that the inorganic acid is selected from nitric acid, hydrochloric acid, and sulfuric acid; B₁, B₂, ..., Bᵢ are not the same acid radical; x₁, x₂, ..., xᵢ represent a charge; and k, l, m₁, m₂, ..., mᵢ represent a real number satisfying 3k - 1 + x₁m₁ + x₂m₂ + ... + xᵢmᵢ = 0 is dissolved in water.

The inorganic acid is selected from nitric acid, hydrochloric acid, and sulfuric acid. The inorganic acid applied to (B₁^{x1}) to (Bi^{xi}) in the composition formula (2) is represented by NO₃⁻ as nitric acid, Cl⁻ as hydrochloric acid, and SO₄²⁻ as sulfuric acid.

The, organic acid is represented by R(COOH)_{y}, wherein R represents an organic group, a hydrogen atom, or a single bond or a double bond; and y represents the number of carboxyl groups in the organic acid and is an integer of 1 or more. The organic acid applied to (B₁^{x1}) to (Bᵢ^{xi}) in the composition formula (2) is represented by R(COO⁻)_{y}. When R is an organic group, the organic group is preferably an aliphatic group having 1 to 10 carbon atoms, particularly 1 to 5 carbon atoms. This aliphatic group may be substituted with other functional groups, for example, a hydroxyl group. Both of a saturated aliphatic group and an unsaturated aliphatic group can be used as the aliphatic group.

The number of carboxyl groups in the organic acid may be 1 or may be 2 or more. In other words, the organic acid may be monocarboxylic acid or may be polycarboxylic acid. Preferably, the number of carboxyl groups in the organic acid is 1 to 3.

Preferable organic acids are classified into the following groups (a) to (c):
(a) organic acids, for example, formic acid, acetic acid, glycolic acid, lactic acid, and gluconic acid, in which the residue other than carboxyl groups is a hydrogen atom or a saturated aliphatic group having 1 to 5 carbon atoms, particularly 1 or 2 carbon atoms, which may be substituted with a hydroxyl group, and the number of carboxyl groups is 1,
(b) organic acids, for example, oxalic acid, maleic acid, malonic acid, malic acid, tartaric acid, and succinic acid, in which the residue other than carboxyl groups is a single bond or a double bond, or a saturated aliphatic group having 1 or 2 carbon atoms or a unsaturated aliphatic group having 2 carbon atoms, which may be substituted with a hydroxyl group, and the number of carboxyl groups is 2, and
(c) organic acids, for example, citric acid, in which the residue other than carboxyl groups is a saturated aliphatic group having 1 to 3 carbon atoms, which may be substituted with a hydroxyl group, and the number of carboxyl groups is 3.

In the embodiment [2], all the acid radicals constituting the complex chromium (III) salt are most preferably a combination of inorganic acid radicals derived from the inorganic acid other than chromic acid or a combination of acid radicals derived from the inorganic acid other than chromic acid and the organic acid, since a wider range of applicability is obtained as a supplementary source of trivalent chromium appropriate to the composition of various baths. In this context, the "inorganic acid radicals derived from the inorganic acid other than chromic acid" refer to acid residues obtained by removing a proton from the inorganic acid. The "acid radicals derived from the inorganic acid other than chromic acid and the organic acid" refer to acid residues obtained by respectively removing a proton from the inorganic acid and from the organic acid.

In the embodiment [2], when all the acid radicals constituting the complex chromium (III) salt are a combination of inorganic acid radicals derived from the inorganic acid other than chromic acid, preferable examples thereof include combinations of inorganic acid radicals derived from hydrochloric acid-nitric acid, hydrochloric acid-sulfuric acid, nitric acid-sulfuric acid, and hydrochloric acid-sulfuric acid-nitric acid.
On the other hand, the combination of acid radicals derived from the inorganic acid other than chromic acid and the organic acid is preferably a combination of acid radical(s) derived from one or two or more inorganic acids selected from hydrochloric acid, nitric acid, and sulfuric acid, and acid radical(s) derived from one or two or more organic acids selected from the group consisting of lactic acid, gluconic acid, glycolic acid, oxalic acid, malic acid, maleic acid, malonic acid, citric acid, acetic acid, and tartaric acid.

In the chromium (III)-containing aqueous solution of the embodiment [2], the compounding ratio of the acid radicals is not particularly limited as long as it falls within the range specified by the composition formula (2).

The concentration of the complex chromium (III) salt in the chromium (III)-containing aqueous solution of the embodiment [2] is 3% by weight or more, preferably 4% by weight or more, in terms of Cr. This concentration is appropriately adjusted according to specific use of the chromium (III)-containing aqueous solution. The concentration of the chromium (III) salt can be determined, without particular limitation, by, for example, potentiometric titration after oxidation of chromium (III) to chromium (IV).

In the chromium (III)-ccntaining aqueous solution of the embodiment [2], preferably, hexavalent chromium and also free acids are substantially absent. The phrase "free acids are substantially absent" means that the stoichiometric ratio represented by the composition formula (2) of the obtained complex chromium (III) salt is satisfied within the range of a measurement error.

The chromium (III)-containing aqueous solution of the embodiment [2] has widely adjustable molar ratios of various acid radicals to Cr. Such a chromium (III)-containing aqueous solution is suitably used, as a chromium plating solution, for the surface treatment of various metals. For example, the chromium (III)-containing aqueous solution is used for final finish plating for decoration and for plating provided as a layer on nickel plating. Also, the chromium (III)-containing aqueous solution is suitably used for the trivalent chromium chemical conversion treatment of zinc plating, tin plating, and the like. The chromium (III)-containing aqueous solution of the present invention is particularly suitably used as a source of trivalent chromium or a supplementary liquid of trivalent chromium for the bath in chromium plating or metal surface treatment, such as trivalent chromium chemical conversion treatment. For the bath containing two or more sources of trivalent chromium in metal surface treatment, the chromium (III)-containing aqueous solution can be suitably used as a supplementary source of trivalent chromium even when the composition ratio of an acid to Cr is out of balance during use. The "trivalent chromium chemical conversion treatment" in this specification refers to treatment in which a material to be treated is brought into contact with an aqueous solution containing a trivalent chromium salt as the main component to chemically produce a coating containing trivalent chromium on the material to be treated.

Then, the chromium (III)-containing aqueous solution containing the complex chromium (III) salt [3], that is, the complex chromium (III) salt which is obtained by the combination of phosphoric acid and an inorganic acid other than chromic acid and phosphoric acid, will be described.

The chromium (III)-containing aqueous solution of the embodiment [3] is a chromium (III)-containing aqueous solution containing a complex chromium (III) salt of at least a phosphoric acid radical and an inorganic acid radical other than chromic acid, which is produced by performing chromic acid reduction reaction in the simultaneous or sequential presence of phosphoric acid and one or two or more inorganic acids other than chromic acid and phosphoric acid in an aqueous solution containing chromic acid.

In the chromium (III)-containing aqueous solution of the embodiment [3], the complex chromium (III) salt has a phosphoric acid radical and one or two or more acid radicals selected from hydrochloric acid, nitric acid, and sulfuric acid, bonded to the chromium atom and is represented by the following composition formula (3):

[Formula 3] **Cr*ₖ*(OH)*₁*(H₂PO₄)*m₁*(HPO*₄*)*m₂*(C₁*^{x₁}*)*n₁*(C₂*^{x₂}*)*n₂* · · · (Cᵢ*^{x^{I}}*)*nᵢ*** (3)

wherein C₁, C₂, ..., Cᵢ represent an acid radical, which is an acid residue obtained by removing a proton from an acid other than phosphoric acid; x₁, x₂, ..., xᵢ represent a charge; and k, l, m₁, m₂, n₁, n₂, ... nᵢ satisfy 3k - 1 - m₁ - 2m₂ + x₁n₁ + x₂n₂ + ... xᵢnᵢ = 0.
The phosphoric acid radical bonded to the chromium atom is H₂PO₄⁻ and/or -HPO₄²⁻ and the ratio of the H₂PO₄⁻ and HPO₄²⁻ is arbitrarily changed by the reaction conditions, the raw material system, and the like. On the other hand, the acid radicals selected from nitric acid, hydrochloric acid, and sulfuric acid, applied to (C₁^{x1}) to (Cᵢ^{xi})), are represented by NO₃⁻, Cl⁻, and SO₄²⁻ , respectively. In the embodiment [3], the phosphoric acid radical and the acid radicals derived from nitric acid, hydrochloric acid, and sulfuric acid in the composition formula of the source of chromium (III) are represented by PO₄, NO₃, Cl, and SO_{4,} respectively.

In the chromium (III)-containing aqueous solution of the embodiment [3], preferably, free acids are also substantially absent. In the embodiment [3], the phrase "free acids are substantially absent" means that the stoichiometric ratio represented by the composition formula (3) of the obtained source of chromium (III) is satisfied within the range of a measurement error.

The concentration of the complex chromium (III) salt in the chromium (III)-containing aqueous solution of the embodiment [3] is adjusted to 3% by weight or more, preferably 4% by weight or more, in terms of Cr. This concentration is adjusted according to specific use of the aqueous solution containing a source of chromium (III). The concentration of the chromium (III) salt can be determined, without particular limitation, by, for example, potentiometric titration after oxidation of chromium (III) to chromium (IV).

If necessary, the chromium (III)-containing aqueous solution of the embodiment [3] can be concentrated by heating and cooled to obtain a crystalline source of chromium (III). The heat-concentration is achieved by removing moistures in the aqueous solution containing a source of chromium (III). The heat-concentration may be performed after the completion of the reaction, or during the reaction. When the heat-concentration is performed during the reaction, produced vapors are condensed using a condenser, and this water is discharged from the reaction system for concentration. This method is efficient and industrially advantageous.

The chromium (III)-containing aqueous solution of the embodiment [3] has widely adjustable molar ratios of the phosphoric acid radical to Cr. Particularly a chromium (III)-containing aqueous solution having a PO₄/Cr molar ratio less than 2 can also be provided.
Such a chromium (III)-containing aqueous solution is suitably used, as a chromium plating solution, for the surface treatment of various metals. For example, the chromium (III)-containing aqueous solution is used for final finish plating for decoration and for plating provided as a layer on nickel plating. Also, the chromium (III)-containing aqueous solution is suitably used for the trivalent chromium chemical conversion treatment of zinc plating, tin plating, and the like.
The chromium (III)-containing aqueous solution of the embodiment [3] is particularly suitably used as a source of trivalent chromium or a supplementary source of trivalent chromium for the bath in chromium plating or metal surface treatment, such as trivalent chromium chemical conversion treatment. For the bath in metal surface treatment whose source of trivalent chromium is an aqueous solution of chromium phosphate, the chromium (III)-containing aqueous solution can be suitably used as a supplementary source of trivalent chromium when the composition ratio of phosphoric acid to Cr is out of balance during use. In addition, by selecting the type of the acid other than phosphoric acid to be reacted, the chromium (III)-containing aqueous solution can be suitably used as a supplementary source of trivalent chromium for, for example, the bath whose source of trivalent chromium is chromium nitrate, chromium chloride, or chromium sulfate or the bath whose source of trivalent chromium is both of chromium phosphate and these sources of trivalent chromium. The "trivalent chromium chemical conversion treatment" in this specification refers to treatment in which a material to be treated is brought into contact with an aqueous solution containing a trivalent chromium salt as the main component to chemically produce a coating containing trivalent chromium on the material to be treated.

The complex chromium (III) salt in the chromium (III)-containing aqueous solutions of the embodiments [1] to [3] of the present invention assumes the form of a six-coordinate complex. The ligands in this complex chromium (III) salt do not influence the charge of the complex ion, when they are uncharged molecules, such as water or ammonia. However, the charge is changed between 2+ and 3-, when a charged atomic group, such as an acid group and a hydroxyl group, is coordinated to chromium (III). For example, the charge is changed to [Cr(H₂O)₅X]²⁺, [Cr(H₂O)₄X₂]⁺, [Cr(H₂O)₃X₃]⁰, [Cr (H₂O)₂X₄]¹⁻, [Cr(H₂O)X₅]²⁻, or [CrX₆]³⁻, wherein X represents a monovalent acid group or a hydroxyl group.

According to the studies of the present inventors, the complex chromium (III) salt according to the present invention differs in charge distribution from chromium (III) salts obtained using a plurality of acids by the conventional techniques, for example, the chromium (III) salt of Patent Document 4. This is considered to be because even if they are prepared with the same composition, the acid radicals added later in the conventional techniques are not easily coordinated to chromium (III), and therefore, a stable complex chromium (III) salt is not obtained; on the other hand, in the complex chromium (III) salt contained in the chromium (III)-containing aqueous solution according to the present invention, the charged atomic group is coordinated to chromium (III) to form a stable complex compound. The charge distribution can be measured by the method described in, for example, Japanese Parent Laid-Open No. 2006-300737, that is, the combined method of ion chromatography and ICP atomic emission spectrometry performed in this order.

Using the chromium (III)-containing aqueous solution of the present invention having such properties, a product excellent in finished appearance is obtained by trivalent chromium chemical conversion treatment. Therefore, the chromium (III)-containing aqueous solution can be suitably used as a trivalent chromium chemical conversion treatment liquid of zinc plating, tin plating, and the like.

### (Process for Producing Chromium (III)-Containing Aqueous Solution)

Next, a preferable process for producing a chromium (III)-containing aqueous solution according to the present invention will be described.
The process for producing a chromium (III)-containing aqueous solution according to the present invention is a process for producing a chromium (III)-containing aqueous solution by performing chromic acid reduction reaction by the contact of chromic acid with an acid other than chromic acid and/or an organic reducing agent in a water solvent, characterized in that the chromic acid reduction reaction is performed in the simultaneous or sequential presence of at least two or more acids selected as the acid other than chromic acid from an inorganic acid and an organic acid.

According to the production process of the present invention, processes for producing three different chromium (III)-containing aqueous solutions can be provided, based on combinations of the inorganic acid and the organic acid used. Specifically, the chromium (III)-containing aqueous solution containing a complex chromium (III) salt can be produced by the following three production processes:
[4] phosphoric acid is used as the inorganic acid, and the chromic acid reduction reaction is performed in the simultaneous or sequential presence of the phosphoric acid and one or two or more organic acids,
[5] the chromic acid reduction reaction is performed in the simultaneous or sequential presence of one or two or more inorganic acids other than chromic acid and phosphoric acid and one or two or more organic acids, and
[6] the chromic acid reduction reaction is performed in the simultaneous or sequential presence of phosphoric acid and one or two or more inorganic acids other than chromic acid and phosphoric acid.

First, the production process [4], that is, the process for producing a chromium (III)-containing aqueous solution in which phosphoric acid is used as the inorganic acid, and the chromic acid reduction reaction is performed in the simultaneous or sequential presence of the phosphoric acid and one or two or more organic acids, will be described. This production process is suitable for obtaining the chromium (III)-containing aqueous solution of the embodiment [1].

The production process [4] is characterized in that, for producing a chromium (III) salt by performing chromic acid reduction reaction by the contact of chromic acid with an acid other than chromic acid and/or an organic reducing agent in a water solvent, at least phosphoric acid is used as the acid other than chromic acid, and the chromic acid reduction reaction is performed in the simultaneous or sequential presence of the phosphoric acid and an organic acid.

The production process [4] preferably includes the following two embodiments:
(1) a method in which the reduction reaction is performed by adding phosphoric acid and an organic acid, or phosphoric acid, an organic acid, and an organic reducing agent to an aqueous solution containing chromic acid (in the following description, referred to as the "first method"), and
(2) a method comprising: a first step of adding phosphoric acid and an organic reducing agent in an amount of 95% or less of a stoichiometric amount necessary for reducing Cr (VI) to Cr (III) to an aqueous solution containing chromic acid for reaction to obtain an aqueous solution containing chromium phosphate; and a second step of adding an organic acid or an organic acid and an organic reducing agent to the obtained aqueous solution containing chromium phosphate to complete the reaction (in the following description, referred to as the "second method").

The chromic acid used in the first method and the second method is preferably chromium trioxide obtained through various purification treatments from a starting raw material sodium chromate obtained by subjecting, for example, chromium ore, to alkaline oxidizing roasting. The chromic acid thus obtained contains a much smaller amounts of impurities, such as Fe, Na, Mg, Al, Ca, Ni, Mo, and W, than those contained in chromic acid prepared using a raw material chromium hydroxide or chromium carbonate obtained by adding caustic soda or soda ash to chromium sulfate or in chromic acid obtained by dissolving high-carbon ferrochromium in sulfuric acid or hydrochloric acid. Thus, the chromium (III)-containing aqueous solution as the target final product can contain these impurities reduced to an exceedingly low level and can also contain a free Cl or SO₄ content reduced to a low level. In many cases, an aqueous solution prepared by adding water to chromic acid for dissolution is used as the aqueous solution containing chromic acid. The concentration of the aqueous solution containing chromic acid is not particularly limited and is preferably in the general range of 20 to 60% by weight. Chromium trioxide may be used in the initial reaction.

The phosphoric acid (orthophosphoric acid) that can be used in the first method and the second method is industrial one. The phosphoric acid used usually has a concentration of 75% by weight or more. However, the phosphoric acid is not limited thereto.

### (First Method)

The first method will be described below in more detail.

The first method has the following two embodiments:
(Al) a method in which phosphoric acid and an organic acid are added to the aqueous solution containing chromic acid for the reduction reaction to obtain the chromium (III)-containing aqueous solution (in the following description, referred to as the "A1 method"), and
(B1) a method in which phosphoric acid, an organic acid, and an organic reducing agent are added to the aqueous solution containing chromic acid for the reduction reaction to obtain the chromium (III)-containing aqueous solution (in the following description, referred to as the "B1 method,").

The A1 method is applied to the case in which the added organic acid also serves as an organic reducing agent. In such a case, an additional organic reducing agent other than the organic acid does not have to be used. This production process can be performed conveniently at low cost, since the additional organic reducing agent is not used. Examples of the organic acid also serving as an organic reducing agent include:
monovalent organic acids, such as lactic acid, gluconic acid, and glycolic acid; divalent organic acids, such as oxalic acid, malic acid, maleic acid, malonic acid, and tartaric acid; and trivalent organic acids, such as citric acid.

The amounts of the phosphoric acid and the organic acid added are not particularly limited as long as they fall within the range field by the composition formula (1) of the complex chromium (III) salt in the aqueous solution of chromic acid. The amount of the organic acid added in the A1 method is appropriately determined in consideration of an amount capable of completely reducing hexavalent chromium to trivalent chromium and an amount satisfying the stoichiometric ratio represented by the composition formula of the target complex chromium (III) salt. In other words, the organic acid can be added in an amount of at least the total of the stoichiometric amount necessary for reducing hexavalent chromium and the stoichiometric amount represented by the composition formula of the target complex chromium (III) salt.

Also, the organic acid may be added directly without dissolution or dilution to the aqueous solution containing chromic acid or may be added in a state in which it is dissolved in or diluted with water.

In the A1 method, the order of adding the phosphoric acid and the organic acid to the aqueous solution containing chromic acid is not particularly limited. For example, a method in which the phosphoric acid and the organic acid are simultaneously and separately added to the aqueous solution containing chromic acid, or a method in which a liquid mixture in which the phosphoric acid and the organic acid are mixed is added to the aqueous solution containing chromic acid, can be used. A method in which the phosphoric acid is mixed in advance with the aqueous solution containing chromic acid to increase acidity in the reaction system, and then, the organic acid is added thereto, is most preferable. As a result, the production of organic decomposition products can be further suppressed.

Conditions, such as the addition speed of the organic acid, in the A1 method are not particularly limited. The addition may be performed continuously at a constant speed or may be performed in several portions appropriate to the reduction from Cr (VI) to Cr (III) or the production of the target complex chromium (III) salt.

The B1 method is applied to the case in which the added organic acid does not have reduction properties. For example, acetic acid, succinic acid, and the like are preferably used as the organic acid that does not have reduction properties. The organic acid may be added directly without dissolution or dilution to the aqueous solution containing chromic acid or may be added in a state in which it is dissolved in or diluted with water.

The amounts of the phosphoric acid and the organic acid added in the B1 method are preferably amounts satisfying the composition formula (1) of the target complex chromium (III) salt.

The organic reducing agent used in the B1 method is mostly decomposed to carbon dioxide and water through the reduction reaction such that substantially no organic decomposition product remains. Specifically, carbohydrate selected from monosaccharides, disaccharides, and starches, alcohol, aldehyde, and carboxylic acid can be used. Among them, monohydric alcohol, such as methyl alcohol and propyl alcohol, and dihydric alcohol, such as ethylene glycol and propylene glycol, are used. If saccharides having a large number of carbon atoms are used as the organic reducing agent, organic decomposition products tend to remain. An increased amount of the organic decomposition products may adversely affect coating appearance in surface treatment. Therefore, in the production process of the present invention, at least one organic reducing agent selected from monohydric and dihydric alcohols whose low level of organic decomposition products is easily achieved is preferably used. Also, the use of monohydric or dihydric alcohol has the advantage of easily obtaining reduction reaction close to the stoichiometric amount. From these viewpoints, it is preferred to use lower alcohol (for example, alcohol having 4 or less carbon atoms), particularly methyl alcohol or ethylene glycol. Particularly the use of methyl alcohol is preferable, since the obtained chromium (III)-containing aqueous solution contains few organic decomposition products.

The organic reducing agent is used as a liquid mixture with the organic acid in which the organic acid in an amount satisfying the stoichiometric amount represented by the composition formula of the complex chromium (III) salt is mixed with the organic reducing agent in an amount necessary for completely reducing hexavalent chromium.

The order of adding the phosphoric acid and the liquid mixture of the organic acid and the organic reducing agent to the aqueous solution containing chromic acid is not particularly limited. A method in which the phosphoric acid is mixed in advance with the aqueous solution of chromic acid to increase acidity in the reaction system, and then, the liquid mixture of the organic acid and the organic reducing agent is added thereto, is most preferable. As a result, the production of organic decomposition products can be further suppressed.

Conditions, such as the addition speed of the liquid mixture of the organic acid and the organic reducing agent, in the B1 method are not particularly limited.
The addition may be performed at a constant speed or may be performed in several portions appropriate to the reduction fro Cr (VI) to Cr (III) or the production of the target complex chromium (III) salt.

In the A1 method and the B1 methods, the chromium (VI) reduction occurs at least by the contact between chromic acid (VI) and the organic acid having reduction effect or the organic reducing agent. This reaction is oxidation-reduction reaction and is therefore very exothermic, and the temperature of the reaction liquid rapidly rises to the boiling point. The reaction temperature is usually 50 to 150°C, preferably 90 to 110°C. After the completion of the reaction, aging is performed for 10 minutes or longer, particularly 30 minutes or longer. The aging temperature is not particularly limited and may be a temperature at the completion of the reaction. If necessary, an organic reducing agent or a reducing agent, such as hydrogen peroxide, may be further added to completely reduce the remaining Cr (VI) until the absence of Cr⁶⁺ emission is confirmed by a diphenylcarbazide method.

### (Second Method)

The second method will be described below in more detail.
The first step of the second method is the step of adding phosphoric acid and an organic reducing agent in an amount of 95% or less of a stoichiometric amount necessary for reducing Cr (VI) to Cr (III) to the aqueous solution containing chromic acid for reaction to obtain an aqueous solution containing chromium phosphate.

The same organic reducing agent as that used in the B1 method in the first method can be used as the organic reducing agent added to the aqueous solution containing chromic acid. The organic reducing agent may be added directly without dilution to the aqueous solution containing chromic acid or may be added in a state in which it is diluted with water. For the dilution with water, it is preferred to adjust the concentration of the organic reducing agent to about 10 to 30% by weight in terms of ease of operation and control of the reaction.

The amount of the organic reducing agent added to the aqueous solution containing chromic acid is 95% or less of a stoichiometric amount necessary for reducing Cr (VI) to Cr (III). This is because if the amount of the organic reducing agent added exceeds this range, gelation occurs for the reaction of chromic acid with phosphoric acid at a PO₄/Cr molar ratio less than 2.

The order of adding the phosphoric acid and the organic reducing agent to the aqueous solution of chromic acid is not particularly limited. For example, a method in which the phosphoric acid and the organic reducing agent are simultaneously and separately added to the aqueous solution of chromic acid, or a method in which a liquid mixture in which the phosphoric acid and the organic reducing agent are mixed is added to the aqueous solution of chromic acid, can be used. A method in which the phosphoric acid is mixed in advance with the aqueous solution of chromic acid to increase acidity in the reaction system, and then, the organic reducing agent is added thereto, is most preferable. As a result, the production of organic decomposition products can be further suppressed.

The oxidation-reduction reaction is started by the addition of the organic reducing agent to the aqueous solution of chromic acid containing the phosphoric acid. The reaction is very exothermic and rapidly proceeds. Therefore, for the reaction, it is preferred to cool produced water vapors using a condenser while refluxing the vapors in the reaction system. The reaction temperature is usually 50 to 150°C, preferably 90 to 110°C. After the completion of the reaction, aging, if necessary, is directly performed at 50 to 150°C, preferably 90 to 110°C and can then proceed to the second step.

The thus-obtained aqueous solution containing chromium phosphate is an aqueous solution containing the residual hexavalent chromium (chromic acid) unreduced to trivalent chromium, and chromium phosphate.

The second step has the following two embodiment:
(A2) a method in which an organic acid is added to the aqueous solution containing chromium phosphate, obtained in the first step, for reaction to obtain the chromium (III)-containing aqueous solution containing the target complex chromium (III) salt (in the following description, referred to as the "A2 method") and,
(B2) a method in which an organic acid and an organic reducing agent are added to the aqueous solution containing chromium phosphate, obtained in the first step, for reaction to obtain the chromium (III)-containing aqueous solution containing the target complex chromium (III) salt (in the following description, referred to as the "B2 method").

The A2 method is applied to the case in which the added organic acid also serves as an organic reducing agent. In such a case, an additional organic reducing agent other than the organic acid does not have to be used. This production process can be performed conveniently at low cost, since the additional organic reducing agent is not used. The same organic acid as that in the A1 method in the first method can be used as the organic acid also serving as an organic reducing agent. The amount of the organic acid added in the A2 method is at least the total of an amount capable of completely reducing the residual hexavalent chromium to trivalent chromium and the stoichiometric amount represented by the composition formula of the target complex chromium (III) salt, and the organic acid is added in this amount to the aqueous solution containing chromium phosphate, obtained in the first step.

Also, the organic acid may be added directly without dissolution or dilution to the aqueous solution containing chromium phosphate, obtained in the first step, or may be added in a state in which it is dissolved in or diluted with water.

Conditions, such as the addition speed of the organic acid, in the A2 method are not particularly limited. The addition may be performed continuously at a constant speed or may be performed in several portions appropriate to the reduction from Cr (VI) to Cr (III) or the production of the target complex chromium (III) salt.

The B2 method is applied to the case in which the added organic acid does not have reduction properties. The same organic reducing agent as that used in the B1 method in the first method can be used as the organic acid that does not have reduction properties.

The organic reducing agent is used as a liquid mixture with the organic acid in which the organic acid in an amount satisfying the stoichiometric amount represented by the composition formula of the complex chromium (III) salt is mixed with the organic reducing agent in an amount necessary for completely reducing hexavalent chromium.

Conditions, such as the addition speed of the liquid mixture of the organic acid and the organic reducing agent, in the B2 method are not Particularly limited. The addition may be performed continuously at a constant speed or may be performed in several portions appropriate to the reduction from Cr (VI) to Cr (III) or the production of the target complex chromium (III) salt.

In the A2 method and the B2 method, the chromium (VI) reduction occurs by the contact between chromic acid (VI) contained in the aqueous solution containing chromium phosphate and the organic acid having reduction effect or the organic reducing agent. This reaction is oxidation-reduction reaction and is therefore very exothermic, and the temperature of the reaction liquid rapidly rises to the boiling point. The reaction temperature is usually 50 to 150°C, preferably 90 to 110°C. After the completion of the reaction, aging is performed for 10 minutes or longer, particularly 30 minutes or longer. The aging temperature is not particularly limited and may be a temperature at the completion of the reaction. If necessary, an organic reducing agent or a reducing agent, such as hydrogen peroxide, may be further added to completely reduce the remaining Cr (VI) until the absence of Cr⁶⁺ emission is confirmed by a diphenylcarbazide method.

In the production process [4], the first method, for obtaining an aqueous solution containing a phosphoric acid radical and an organic acid radical as well as one or two or more inorganic acid radicals obtained by removing a proton from an inorganic acid selected from hydrochloric acid, nitric acid, and sulfuric acid, can be performed by adding phosphoric acid to the aqueous solution containing chromic acid and additionally performing the addition of one of the following inorganic acids other than phosphoric acid or a combination of two or more thereof. For this purpose, the first step of the second method can be performed as in the first method and then proceed to the second step.

When hydrochloric acid is used as the inorganic acid, preferably, a liquid mixture of the hydrochloric acid and the organic reducing agent (or the organic acid also serving as a reducing agent) is prepared and added to the aqueous solution containing chromic acid, for suppressing the production of chromyl chloride. Alternatively, the organic reducing agent (or the organic acid also serving as a reducing agent) is added to the aqueous solution containing chromic acid to reduce a portion of the chromic acid in advance, and then, the liquid mixture of the hydrochloric acid and the organic reducing agent (or the organic acid also serving as a reducing agent) may be added thereto. According to this addition method, the production of chromyl chloride can be further suppressed.

When nitric acid is used as the inorganic acid, it is preferred to simultaneously and separately add the nitric acid and the organic reducing agent (or the organic acid also serving as a reducing agent) to the aqueous solution containing chromic acid. The term "separately" means that the nitric acid and the organic reducing agent (or the organic acid also serving as a reducing agent) are added without being mixed. This is because the organic reducing agent (or the organic acid also serving as a reducing agent) and the nitric acid, when mixed, react with each other to produce NOx, which is dangerous.

When sulfuric acid is used as the inorganic acid, the addition of the sulfuric acid can be performed using a method in which the sulfuric acid is directly added to the aqueous solution containing chromic acid, and after the completion of the addition, the organic reducing agent (or the organic acid also serving as a reducing agent) is added thereto, a method in which the sulfuric acid and the organic reducing agent (or the organic acid also serving as a reducing agent) are simultaneously and separately added to the aqueous solution containing chromic acid, or a method in which a liquid mixture in which the sulfuric acid and the organic reducing agent (or the organic acid also serving as a reducing agent) are mixed is prepared and added to the aqueous solution containing chromic acid. The term "separately" means that the sulfuric acid and the organic reducing agent (or the organic acid also serving as a reducing agent) are added without being mixed.

The addition of the inorganic acid may be performed before or after the addition of the phosphoric acid to the aqueous solution containing chromic acid or may be performed simultaneously with the addition of the phosphoric acid. This term "simultaneously" means that when phosphoric acid and sulfuric acid used as the inorganic acid other than phosphoric acid are taken as an example, the time of the addition of the phosphoric acid and the time of the addition of the sulfuric acid completely or partially overlap with each other.

In the chromium (III)-containing aqueous solution containing a complex chromium (III) salt obtained by the production process [4], hexavalent chromium is substantially absent. Preferably, free acids are also substantially absent.

The concentration of the complex chromium (III) salt in the final aqueous solution is adjusted to 3% by weight or more, preferably 4% by weight or more, in terms of Cr. This concentration is appropriately adjusted according to specific use or the like of the chromium (III)-containing aqueous solution.

If necessary, the chromium (III)-containing aqueous solution obtained by the production process [4] can be heat-concentrated and cooled to obtain a crystalline complex chromium (III) salt. The heat-concentration is achieved by removing moistures from the chromium (III)-containing aqueous solution. The heat-concentration may be performed after the completion of the reaction, or during the reaction. When the heat-concentration is performed during the reaction, produced vapors are condensed using a condenser, and this water is discharged from the reaction system for concentration. This method is efficient and industrially advantageous.

Then, the production process [5], that is, the process for producing a chromium (III)-containing aqueous solution in which the chromic acid reduction reaction is performed in the simultaneous or sequential presence of one or two or more inorganic acids other than chromic acid and one or two or more organic acids, will be described. This production process is suitable for obtaining the chromium (III)-containing aqueous solution of the embodiment [2].

The production process [5] is characterized in that, for producing a chromium (III) salt by performing chromic acid reduction reaction by the contact of chromic acid with an acid other than chromic acid and/or an organic reducing agent in a water solvent, the chromic acid reduction reaction is performed in the simultaneous or sequential presence of two or more acids selected as the acid other than chromic acid from hydrochloric acid, sulfuric acid, nitric acid, and an organic acid.

The reaction according to the present invention is usually started by the contact of chromic acid with an acid other than chromic acid and an organic reducing agent (or an organic acid having reduction effect) in a water solvent. In the present invention, the phrase "simultaneous presence of two or more acids" refers to a state in which from the start of the reaction to the completion of the reaction, these two or more acids added to the water solvent remain unreacted, while they are reacted with chromium (III) by the addition of an organic reducing agent. On the other hand, the phrase "sequential presence of two or more acids" refers to a state in which the initially added acid is completely reacted with chromium (III), and in the substantial absence of the unreacted acid, the other type of acid is added for its presence in the water solvent.

The chromic acid used is preferably chromium trioxide obtained through various purification treatments from a starting raw material sodium chromate obtained by subjecting, for example, chromium ore, to alkaline oxidizing roasting. The chromic acid thus obtained contains a much smaller amount of impurities, such as Fe, Na, Mg, Al, Ca, Ni, Mo, and W, than those contained in chromic acid prepared using a raw material chromium hydroxide or chromium carbonate obtained by adding caustic soda or soda ash to chromium sulfate or in chromic acid obtained by dissolving high-carbon ferrochromium in sulfuric acid or hydrochloric acid. Thus, the chromium (III)-containing aqueous solution as the target final product can contain these impurities reduced to an exceedingly low level and can also contain a free Cl or SO₄ content reduced to a low level. In many cases, an aqueous solution prepared by adding water to chromic acid for dissolution is used as the aqueous solution containing chromic acid. The concentration of the aqueous solution containing chromic acid is not particularly limited and is preferably in the general range of 20 to 60% by weight. Chromium trioxide may be used in the initial reaction.

The acids used are selected from an inorganic acid (hydrochloric acid, sulfuric acid, and nitric acid) and an organic acid. The same organic acid as that in the embodiment [2] can be used as the organic acid.

The organic reducing agent used is mostly decomposed to carbon dioxide and water through the reduction reaction such that substantially no organic decomposition product remains. Specifically, carbohydrate selected from menosaccharides, disaccharides, and starches, alcohol, aldehyde, and carboxylic acid can be used. Among them, monohydric alcohol, such as methyl alcohol and propyl alcohol, and dihydric alcohol, such as ethylene glycol and propylene glycol, are used. If saccharides having a large number of carbon atoms are used as the organic reducing agent, organic decomposition products tend to remain. An increased amount of the organic decomposition products may adversely affect coating appearance in surface treatment. Therefore, in the present production process, at least one organic reducing agent selected from monohydric and dihydric alcohols whose low level of organic decomposition products is easily achieved is preferably used. Also, the use of monohydric or dihydric alcohol has the advantage of easily obtaining reduction reaction close to the stoichiometric amount. From these viewpoints, it is preferred to use lower alcohol (for example, alcohol having 4 or less carbon atoms), particularly methyl alcohol or ethylene glycol. Particularly the use of methyl alcohol is preferable, since the obtained chromium (III)-containing aqueous solution contains few organic decomposition products.

In the production process [5], the organic acid used may also serve as an organic reducing agent, depending on its type. In such a case, the organic acid can have both of a function as the organic reducing agent and a function as the acid radical bonded to the chromium atom by adjusting the amount of the organic acid added. Examples of the organic acid also serving as an organic reducing agent include: monovalent organic acids, such as lactic acid, gluconic acid, and glycolic acid; divalent organic acids, such as oxalic acid, malic acid, maleic acid, malonic acid, and tartaric acid; and trivalent organic acids, such as citric acid.

The amount of the organic acid also serving as an organic reducing agent added is appropriately determined in consideration of, for example, the total of an amount necessary for reducing the unreduced hexavalent chromium to trivalent chromium and an amount satisfying the stoichiometric ratio represented by the composition formula of the target complex chromium (III) salt.
The inorganic acid, the organic acid, and the organic reducing agent may be used without dissolution or dilution or may be used in a state in which the inorganic acid, the organic acid, or the organic reducing agent is dissolved in or diluted with water.

For example, for the chromium (III)-containing aqueous solution containing a complex chromium (III) salt wherein all the acid radicals are acid radicals derived from the inorganic acid other than chromic acid (acid residues obtained by removing a proton from the inorganic acid), the contact of the chromic acid with the acid other than chromic acid and/or the organic reducing agent in the water solvent is preferably performed by a method in which after or while the desired inorganic acids are simultaneously or sequentially added to the aqueous solution containing chromic acid, the organic reducing agent is added thereto.

Specifically, the complex chromium (III) salt wherein all the acid radicals are acid radicals derived from the inorganic acid other than chromic acid (acid residues obtained by removing a proton from the inorganic acid) can be obtained by combining two or three of the following steps (C1) to (C3).

The step (C1) is a step in which the chromic acid reduction reaction is performed at least by the contact of chromic acid with sulfuric acid and an organic reducing agent in a water solvent.

This step (C1) is applied to the case in which sulfuric acid is used as the inorganic acid. The addition of the sulfuric acid and the organic reducing agent to the aqueous solution containing chromic acid can be performed using a method in which the sulfuric acid is directly added to the aqueous solution containing chromic acid, and after the completion of the addition, the organic reducing agent is added thereto, a method in which the sulfuric acid and the organic reducing agent are simultaneously and separately added to the aqueous solution containing chromic acid, or a method in which a liquid mixture in which the sulfuric acid and the organic reducing agent are mixed is added to the aqueous solution containing chromic acid.

The step (C2) is a step in which the chromic acid reduction reaction is performed at least by the contact of chromic acid with nitric acid and an organic reducing agent in a water solvent.

This step (C2) is applied to the case in which nitric acid is used as the inorganic acid. It is preferred to simultaneously and separately add the nitric acid and the organic reducing agent to the aqueous solution containing chromic acid. The term "separately" means that the nitric acid and the organic reducing agent are added without being mixed. The organic reducing agent and the nitric acid, when mixed, react with each other to produce NOx, which is dangerous.

The step (C3) is a step in which the chromic acid reduction reaction is performed at least by the contact of chromic acid with hydrochloric acid and an organic reducing agent in a water solvent.

This step (C3) is applied to the case in which hydrochloric acid is used as the inorganic acid. The addition of the hydrochloric acid and the organic reducing agent to the aqueous solution containing chromic acid is preferably performed by preparing a liquid mixture of the hydrochloric acid and the organic reducing agent and adding this liquid mixture to the aqueous solution containing chromium, for suppressing the production of chromyl chloride. Alternatively, the organic reducing agent is added to the aqueous solution containing chromic acid to reduce a portion of the chromic acid in advance, and then, the liquid mixture of the hydrochloric acid and the organic reducing agent may be added thereto. According to this addition method, the production of chromyl chloride can be further suppressed.

The steps (C1) to (C3) may be simultaneously performed. This term "simultaneously perform" means that at least before the reaction in each step is completed, the other steps are performed simultaneously using the aqueous solution containing chromic acid used in the step.

On the other hand, the following methods (D1) to (D5) are preferably used for producing the complex chromium (III) salt wherein the acid radicals are a combination of acid radicals derived from the inorganic acid other than chromic acid and the organic acid (acid residues obtained by respectively removing a proton from the inorganic acid and from the organic acid):
(D1) a method in which an inorganic acid and an organic acid are added to the aqueous solution containing chromic acid for reaction,
(D2) a method in which an inorganic acid, an organic acid, and an organic reducing agent are added to the aqueous solution containing chromic acid for reaction,
(D3) a method in which an organic acid is added, for reaction, to the solution containing chromic acid, obtained by one or two or more of the steps (C1) to (C3), (D4) a method in which an organic acid and an organic reducing agent are added, for reaction, to the solution containing chromic acid, obtained by one or two or more of the steps (C1) to (C3), and
(D5) a method in which an organic reducing agent is added to the aqueous solution containing chromic acid to reduce a portion of the chromic acid in advance, and the resulting solution and hydrochloric acid or/and sulfuric acid are added to a solution containing an organic acid to compete the chromic acid reduction reaction.

The (D1), (D3), and (D5) methods are applied to the case in which the organic acid also serves as an organic reducing agent. The (D2) and (D4) methods are applied to the case in which the organic acid does not serve as an organic reducing agent. Acetic acid, succinic acid, and the like are preferably used as the organic acid that does not serve as an organic reducing agent.

In the (D1) method, the organic acid having reduction effect is used instead of the organic reducing agent throughout initial to final steps or only in the final step in one or two or more of the steps (C1) to (C3), and the organic acid can be added in an amount of at least the total of an amount necessary for completely reducing hexavalent chromium and an amount satisfying the stoichiometric ratio represented by the composition formula of the target complex chromium (III) salt, to complete the chromic acid reduction reaction such that the hexavalent chromium is substantially absent.

In the (D2) method, a liquid mixture in which the organic acid and the organic reducing agent are mixed is used in the final step in one or two or more of the steps (C1) to (C3), and the organic acid can be added in an amount satisfying the stoichiometric ratio represented by the composition formula of the complex chromium (III) salt, while the organic reducing agent can be added in an amount necessary for completely reducing hexavalent chromium, to complete the chromic acid reduction reaction such that the hexavalent chromium is substantially absent.

In the (D3) method, the organic acid also serving as a reducing agent is added to the solution containing chromic acid, obtained by one or two or more of the steps (C1) to (C3), and the organic acid can be added in an amount of at least the total of an amount necessary for completely reducing hexavalent chromium and an amount satisfying the stoichiometric ratio represented by the composition formula of the target complex chromium (III) salt, to complete the chromic acid reduction reaction such that the hexavalent chromium is substantially absent.

In the (D4) method, a liquid mixture in which the organic acid and the organic reducing agent are mixed is used in the solution containing chromic acid, obtained by one or two or more of the steps (C1) to (C3), and the organic acid can be added in an amount satisfying the stoichiometric ratio represented by the composition formula of the complex chromium (III) salt, while the organic reducing agent can be added in an amount necessary for completely reducing hexavalent chromium, to complete the chromic acid reduction reaction such that the hexavalent chromium is substantially absent.

In the (D5) method, the solution containing the organic acid used is prepared as a solution in which the organic acid is dissolved, in water, in an amount of at least the total of an amount necessary for completely reducing hexavalent chromium and an amount satisfying the stoichiometric ratio represented by the composition formula of the target complex chromium (III) salt, and a solution containing a portion of the chromic acid reduced in advance, and hydrochloric acid or/and sulfuric acid can be added to the solution containing the organic acid to complete the chromic acid reduction reaction such that the hexavalent chromium is substantially absent.

In the steps (C1) to (C3) and the (D1) to (D5) methods, the chromium (VI) reduction occurs by the contact of chromic acid (VI) with the inorganic acid and the organic acid, and the organic reducing agent used if necessary. This reaction is oxidation-reduction reaction and is therefore very exothermic, and the temperature of the reaction liquid rapidly rises to the boiling point. The reaction temperature is usually 50 to 150°C, preferably 90 to 110°C. After the completion of the reaction, aging is performed for 10 minutes or longer, particularly 30 minutes or longer. The aging temperature is not particularly limited and may be a temperature at the completion of the reaction. If necessary, an organic reducing agent or a reducing agent, such as hydrogen peroxide, may be further added to completely reduce the remaining Cr (VT) until the absence of Cr⁶⁺ emission is confirmed by a diphenylcarbazide method.

In the chromium (III)-containing aqueous solution containing a complex chromium (III) salt obtained by the production process [5], hexavalent chromium is substantially absent. Preferably, free acids are also substantially absent.

The concentration of the complex chromium (III) salt in the final aqueous solution is 3% by weight or more, preferably 4% by weight or more, in terms of Cr. This concentration is appropriately adjusted according to specific use or the like of the chromium (III)-containing aqueous solution.

If necessary, the chromium (III)-containing aqueous solution obtained by the production process [5] can be heat-concentrated and cooled to obtain a crystalline complex chromium (III) salt. The heat-concentration is achieved by removing moistures from the chromium (III)-containing aqueous solution. The heat-concentration may be performed after the completion of the reaction, or during the reaction. When the heat-concentration is performed during the reaction, produced vapors are condensed using a condenser, and this water is discharged from the reaction system for concentration. This method is efficient and industrially advantageous.

Then, the production process [6], that is, the process for producing a chromium (III)-containing aqueous solution in which the chromic acid reduction reaction is performed in the simultaneous or sequential presence of phosphoric acid and one or two or more inorganic acids other than chromic acid and phosphoric acid, will be described. This production process is suitable for obtaining the chromium (III)-containing aqueous solution of the embodiment [3].

The production process [6] is characterized in that, for producing a chromium (III) salt by performing chromic acid reduction reaction by the contact of chromic acid with an acid other than chromic acid and an organic reducing agent in a water solvent, the chromic acid reduction reaction is performed in the simultaneous or sequential presence of, as the acid other than chromic acid, phosphoric acid and one or two or more acids selected from hydrochloric acid, nitric acid, and sulfuric acid.

This reaction is usually started by the contact of chromic acid with an acid other than chromic acid and an organic reducing agent in a water solvent. In the production process [6], the phrase "simultaneous presence of phosphoric acid and one or two or more acids" selected from hydrochloric acid, nitric acid, and sulfuric acid refers to a state in which from the start of the reaction to the completion of the reaction, two or more of the phosphoric acid, the hydrochloric acid, the nitric acid, and the sulfuric acid added to the water solvent remain unreacted, while they are reacted with chromium (III) by the addition of an organic reducing agent. On the other hand, the phrase "sequential presence of phosphoric acid and one or two or more acids" selected from hydrochloric acid, nitric acid, and sulfuric acid refers to a state in which the initially added acid is completely reacted with chromium (III), and in the substantial absence of the unreacted acid, the other type of acid is added for its presence in the water solvent.

The raw material chromic acid used in the present invention is preferably chromium trioxide obtained through various purification treatments from a starting raw material sodium chromate obtained by subjecting, for example, chromium ore, to alkaline oxidizing roasting. The chromic acid thus obtained contains a much smaller amount of impurities, such as Fe, Na, Mg, A1, Ca, Ni, Mo, and W, than those contained in chromic acid prepared using a raw material chromium hydroxide or chromium carbonate obtained by adding caustic soda or soda ash to chromium sulfate or in chromic acid obtained by dissolving high-carbon ferrochromium in sulfuric acid or hydrochloric acid. Thus, the aqueous solution containing a source of chromium (III) as the target final product can contain these impurities reduced to an exceedingly low level and can also contain a free Cl or SO₄ content reduced to a low level. In many cases, an aqueous solution prepared by adding water to chromic acid for dissolution is used as the aqueous solution containing chromic acid. The concentration of the aqueous solution containing chromic acid is not particularly limited and is preferably in the general range of 20 to 60% by weight. Chromium trioxide may be used in the initial reaction.

The organic reducing agent used is mostly decomposed to carbon dioxide and water through the reduction reaction described later such that substantially no organic decomposition product remains. Specifically, carbohydrate selected from monosaccharides, disaccharides, and starches, alcohol, aldehyde, and carboxylic acid can be used. Among them, monohydric alcohol, such as methyl alcohol and propyl alcohol, and dihydric alcohol, such as ethylene glycol and propylene glycol, are used. If saccharides having a large number of carbon atoms are used as the organic reducing agent, organic decomposition products tend to remain, and the low level of organic decomposition products is not easily achieved. Particularly an increased amount of the organic decomposition products contained in the obtained aqueous solution containing a source of chromium (III) may adversely affect coating appearance in surface treatment. Therefore, in the present production process, at least one organic reducing agent selected from monohydric and dihydric alcohols whose low level of organic decomposition products is easily achieved is preferably used. Also, the use of monohydric or dihydric alcohol has the advantage of easily obtaining reduction reaction close to the stoichiometric amount. From these viewpoints, it is preferred to use lower alcohol (for example, alcohol having 4 or less carbon atoms), particularly methyl alcohol or ethylene glycol. Particularly the use of methyl alcohol is preferable, since the obtained aqueous solution containing a source of chromium (III) contains few organic decomposition products.

The organic reducing agent may be added after dilution with or dissolution in water to the water solvent containing chromic acid or may be added as a mixture with the acid. For the dilution with or dissolution in water, it is preferred to adjust the concentration of the organic reducing agent to about 10 to 30% in terms of ease of operation and control of the reaction.

The phosphoric acid and the acid other than chromic acid and phosphoric acid used in the production process [6] are usually used in a state in which the phosphoric acid or the acid is dissolved in water. Alternatively, industrial products in which, for example, phosphoric acid, hydrochloric acid, nitric acid, or sulfuric acid, is dissolved at various concentrations in water are commercially available, and therefore, these industrial products can also be used directly.

In the production process [6], the phosphoric acid, the acid other than chromic acid and phosphoric acid, and the organic reducing agent are added to the water solvent containing chromic acid for the chromic acid reduction reaction.

The order of adding the phosphoric acid, the acid other than chromic acid and phosphoric acid, and the organic reducing agent to the water solvent containing chromic acid is, for example, a method in which after or while the phosphoric acid and the acid other than chromic acid and phosphoric acid are added to the water solvent containing chromic acid, the organic reducing agent is added thereto, or a method in which the acid other than chromic acid and phosphoric acid is added to the water solvent containing chromic acid; to this solution, the organic reducing agent is added; and the phosphoric acid is added thereto during or after the reaction. This addition method is industrially useful. The present inventors have found that the reaction for which phosphoric acid in terms of PO₄ with respect to 1 mol of the chromium atom is added at a PO₄/Cr molar ratio less than 2 to the water solvent containing chromic acid, is performed in an amount of 95% or less of a stoichiometric amount necessary for reducing Cr (VI) to Cr (III), and the resulting aqueous solution of chromium phosphate is not gelated. Thus, the phosphoric acid in terms of PO₄ with respect to 1 mol of the chromium atom is added at a PO_{4/}Cr molar ratio less than 2 to the water solvent containing chromic acid; to this solution, the organic reducing agent is added, for reaction, in an amount of 95% or less of a stoichiometric amount necessary for reducing Cr (VI) to Cr (III); and next, the acid other than the chromic acid and phosphoric acid and the remaining organic reducing agent may be added to complete the subsequent reduction reaction.

The addition of the phosphoric acid, the acid other than chromic acid and phosphoric acid, and the organic reducing agent to the water solvent containing chromic acid is preferably performed by the following method.

The addition of the phosphoric acid can be performed using a method in which the phosphoric acid is directly added to the water solvent containing chromic acid, and after the completion of the addition, the organic reducing agent is added thereto, a method in which the phosphoric acid and the organic reducing agent are simultaneously and separately added to the water solvent containing chromic acid, or a method in which a liquid mixture in which the phosphoric acid and the organic reducing agent are mixed is prepared and added to the water solvent containing chromic acid. The term "separately" means that the phosphoric acid and the organic reducing agent are added without being mixed.

The production process [6] is performed by adding the phosphoric acid and additionally performing the addition of one of the following acids other than chromic acid and phosphoric acid or a combination of two or more thereof.

When hydrochloric acid is used as the acid other than chromic acid and phosphoric acid, preferably, a liquid mixture of the hydrochloric acid and the organic reducing agent is prepared and added to the water solvent containing chromic acid, for suppressing the production of chromyl chloride. Alternatively, the organic reducing agent is added to the water solvent containing chromic acid to reduce a portion of the chromic acid in advance, and then, the liquid mixture of the hydrochloric acid and the organic reducing agent may be added thereto. According to this addition method, the production of chromyl chloride can be further suppressed.

When nitric acid is used as the acid other than chromic acid and phosphoric acid, it is preferred to simultaneously and separately add the nitric acid and the organic reducing agent to the water solvent containing chromic acid. The term "separately" means that the nitric acid and the organic reducing agent are added without being mixed. This is because the organic reducing agent and the nitric acid, when mixed, react with each other to produce NOx, which is dangerous.

When sulfuric acid is used as the acid other than chromic acid and phosphoric acid, the addition of the sulfuric acid can be performed using a method in which the sulfuric acid is directly added to the water solvent containing chromic acid, and after the completion of the addition, the organic reducing agent is added thereto, a method in which the sulfuric acid and the organic reducing agent are simultaneously and separately added to the water solvent containing chromic acid, or a method in which a liquid mixture in which the sulfuric acid and the organic reducing agent are mixed is prepared and added to the water solvent containing chromic acid. The term "separately" means that the sulfuric acid and the organic reducing agent are added without being mixed.

The addition of the acid other than chromic acid and phosphoric acid may be performed before or after the addition of the phosphoric acid to the water solvent containing chromic acid or may be performed simultaneously with the addition of the phosphoric acid. This term "simultaneously" means that when phosphoric acid and sulfuric acid used as the acid other than chromic acid and phosphoric acid are taken as an example, the time of the addition of the phosphoric acid and the time of the addition of the sulfuric acid completely or partially overlap with each other.

The ratio of the added acid other than chromic acid and phosphoric acid to the phosphoric acid and the amount of the acid added, and the like may be selected within the range represented by the composition formula (3) of the target source of chromium (III).

Preferably, the method for the addition of the organic reducing agent to the water solvent containing chromic acid is appropriately selected according to the type of the acid used. The total amount of the organic reducing agent added (including the individual additions) can be an amount that reduces the chromic acid such that Cr (VI) is substantially absent in the obtained aqueous solution containing a source of chromium (III). In many cases, this total amount of the organic reducing agent added may be an amount in slight excess of the stoichiometric amount capable of completely reducing chromic acid to trivalent chromium. It is preferred to add the organic reducing agent until the absence of Cr⁶⁺ emission is confirmed by a diphenylcarbazide method.

The oxidation-reduction reaction is started at least by the addition of the organic reducing agent to the water solvent containing chromic acid. This oxidation-reduction reaction is very exothermic, and the temperature of the reaction liquid rapidly rises to the boiling point. The reaction temperature is usually 50 to 150°C, preferably 90 to 110°C. After the completion of the reaction, aging is performed for 10 minutes or longer, particularly 30 minutes or longer. The aging temperature is not particularly limited and may be a temperature at the completion of the reaction. If necessary, an organic reducing agent or a reducing agent, such as hydrogen peroxide, may be further added to completely reduce the remaining Cr (VI) until the absence of Cr⁶⁺ emission is confirmed by a diphenylcarbazide method.

The aqueous solution containing a source of chromium (III) obtained by the production processes [4] to [6] of the present invention is suitably used, as a chromium plating solution, for the surface treatment of various metals. For example, the aqueous solution containing a source of chromium (III) is used for final finish plating for decoration and for plating provided as a layer on nickel plating. Also, the aqueous solution containing a source of chromium (III) is suitably used for the trivalent chromium chemical conversion treatment of zinc plating, tin plating, and the like. The aqueous solution containing a source of chromium (III) obtained by the production processes [4] to [6] of the present invention is particularly suitably used as a source of trivalent chromium for the bath in chromium plating or metal surface treatment, such as trivalent chromium chemical conversion treatment.

### Examples

The present invention will be described below by way of Examples. However, the present invention is not intended to be limited to these Examples. "%" means "% by weight" unless otherwise specified.

In these examples, the charge distribution of a chromium (III)-containing aqueous solution was determined according to IC-ICP/AES (ion chromatography-ICP atomic emission spectrometry) using a dilution of the aqueous solution of chromium (III) with water to a total chromium concentration of 100 ppm.
The ion chromatography apparatus (manufactured by Nippon Dionex K.K., DX-500) was operated under the following conditions.
Ion exchange resin: ethylvinylbenzene-divinylbenzene polymer (5.5 µm in diameter)
Eluent: aqueous solution of methanesulfonic acid (the methanesulfonic acid concentration was increased from 2 mmol/L to 40 mmol/L in a time-dependent linear manner over 30 minutes and after the lapse of 30 minutes, kept at 40 mmol/L)
Flow rate: 1.2 ml/min
Introduction amount of a solution to be measured: 20 µl
The ICP atomic emission spectrometry apparatus (manufactured by Seiko Instruments, Inc., SPS7800) was operated under the following conditions.
RF output: 1.0 kW
Frequency: 40.7 MHz
Plasma gas flow rate: 15 L/min
Nebulizer pressure: 200 kPa
Detection wavelength for chromium: 283.563 nm

### [Example 1]

### (First Step)

325.3 g of water was placed in a glass reaction container equipped with a condenser, and 124.9 g of chromium trioxide was further added thereto. The mixture was sufficiently stirred to prepare an aqueous solution of chromic acid. Then, 292.8 g of 75% phosphoric acid was added thereto to prepare a mixed aqueous solution of chromic acid and phosphoric acid.

Ethylene glycol was used as a reducing agent. 96.1 g of a 20% aqueous solution of ethylene glycol obtained by adding 76.6 g of water to 19.5 g of 98.5% ethylene glycol was added to the mixed aqueous solution of chromic acid and phosphoric acid at a speed of about 0.8 mL/min using a metering pump. The time of the addition was about 2 hours, and the temperature was 102°C. This 19.5 g of 98.5% ethylene glycol corresponds to an amount necessary for reducing 83% chromic acid.

### (Second Step)

Then, 216.2 g of an aqueous solution of oxalic acid (contained at a concentration of 35% in terms of (COOH)₂) in which 108.1 g of oxalic acid dihydrate was dissolved in 108.1 g of water was added to the solution obtained in the first step at a speed of about 1.6 mL/min. The time of the addition was about 2 hours.

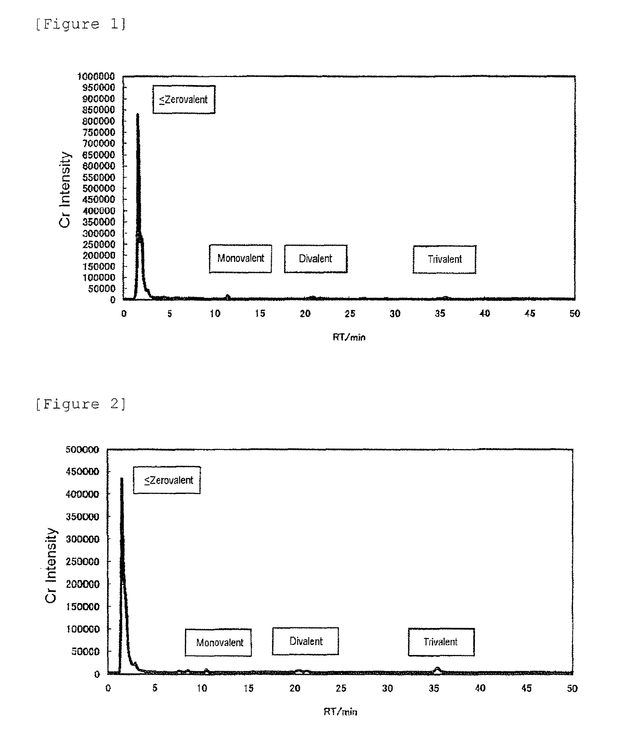

After the completion of the addition of the aqueous solution of oxalic acid, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1. Also, the charge distribution of the obtained aqueous solution was measured. The results are shown in Figure 1.

### [Example 2]

### (First Step)

512.9 g of water was placed in a glass reaction container equipped with a condenser, and 81.9 g of chromium trioxide was further added thereto. The mixture was sufficiently stirred to prepare an aqueous solution of chromic acid. Then, 106.7 g of 75% phosphoric acid was added thereto to prepare a mixed aqueous solution of chromic acid and phosphoric acid.

Ethylene glycol was used as a reducing agent. 48.6 g of a 20% aqueous solution of ethylene glycol obtained by adding 38.7 g of water to 9.9 g of 98.5% ethylene glycol was added to the mixed aqueous solution of chromic acid and phosphoric acid at a speed of about 0.8 mL/min using a metering pump. The time of the addition was about 1 hour, and the temperature was 100°C. This 9.9 g of 98.5% ethylene glycol corresponds to an amount necessary for reducing 64% chromic acid.

### (Second Step)

Then, 302.4 g of an aqueous solution of oxalic acid (contained at a concentration of 35% in terms of (COOH)₂) in which 151.2 g of oxalic acid dihydrate was dissolved in 151.2 g of water was added to the solution obtained in the first step at a speed of about 2.3 mL/min. The time of the addition was about 2 hours.

After the completion of the addition of the aqueous solution of oxalic acid, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1.

### [Example 3]

### (First Step)

315.0 g of water was placed in a glass reaction container equipped with a condenser, and 124.9 g of chromium trioxide was further added thereto. The mixture was sufficiently stirred to prepare an aqueous solution of chromic acid. Then, 292.8 g of 75% phosphoric acid was added thereto to prepare a mixed aqueous solution of chromic acid and phosphoric acid.

Ethylene glycol was used as a reducing agent. 96.1 g of a 20% aqueous solution of ethylene glycol obtained by adding 76.6 g of water to 19.5 g of 98.5% ethylene glycol was added to the mixed aqueous solution of chromic acid and phosphoric acid at a speed of about 0.8 mL/min using a metering pump. The time of the addition was about 2 hours, and the temperature was 102°C. This 19.5
g of 98.5% ethylene glycol corresponds to an amount necessary for reducing 83% chromic acid.

### (Second Step)

Then, 209.1 g of an aqueous solution of malonic acid (contained at a concentration of 30% in terms of CH₂(COOH)₂) in which 64.0 g of malonic acid was dissolved in 145.1 g of water was added to the solution obtained in the first step at a speed of about 1.6 mL/min. The time of the addition was about 2 hours.
After the completion of the addition of the aqueous solution of malonic acid, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1. Also, the charge distribution of the obtained aqueous solution was measured. The results are shown in Figure 2.

### [Example 4]

### (First Step)

265.4 g of water was placed in a glass reaction container equipped with a condenser, and 124.9 g of chromium trioxide was further added thereto. The mixture was sufficiently stirred to prepare an aqueous solution of chromic acid. Then, 292.8 g of 75% phosphoric acid was added thereto to prepare a mixed aqueous solution of chromic acid and phosphoric acid.

Ethylene glycol was used as a reducing agent. 96.1 g of a 20% aqueous solution of ethylene glycol obtained by adding 76.6 g of water to 19.5 g of 98.5% ethylene glycol was added to the mixed aqueous solution of chromic acid and phosphoric acid at a speed of about 0.8 mL/min using a metering pump. The time of the addition was about 2 hours, and the temperature was 102°C. This 19.5 g of 98.5% ethylene glycol corresponds to an amount necessary for reducing 83% chromic acid.

### (Second Step)

Then, 257.4 g of an aqueous solution of malic acid (contained at a concentration of 30% in terms of CH(OH)CH₂(COOH)₂) in which 78.0 g of malic acid was dissolved in 179.4 g of water was added to the solution obtained in the first step at a speed of about 1.9 mL/min. The time of the addition was about 2 hours.

After the completion of the addition of the aqueous solution of malic acid, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1.

### [Example 5]

### (First Step)

334.2 g of water was placed in a glass reaction container equipped with a condenser, and 124.9 g of chromium trioxide was further added thereto. The mixture was sufficiently stirred to prepare an aqueous solution of chromic acid. Then, 292.8 g of 75% phosphoric acid was added thereto to prepare a mixed aqueous solution of chromic acid and phosphoric acid.

Methyl alcohol was used as a reducing agent. 82.6 g of a 20% aqueous solution of methyl alcohol obtained by adding 66.0 g of water to 16.6 g of 99.5% methyl alcohol was added to the mixed aqueous solution of chromic acid and phosphoric acid at a speed of about 0.7 mL/min using a metering pump. The time of the addition was about 2 hours, and the temperature was 103°C. This 16.6 g of 99.5% methyl alcohol corresponds to an amount necessary for reducing 83% chromic acid.

### (Second Step)

Then, 216.2 g of an aqueous solution of oxalic acid (contained at a concentration of 35% in terms of (COOH)₂) in which 108.1 g of oxalic acid dihydrate was dissolved in 108.1 g of water was added to the solution obtained in the first step at a speed of about 1.6 mL/min. The time of the addition was about 2 hours.

After the completion of the addition of the aqueous solution of oxalic acid, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1.

### [Example 6]

356.7 g of water was placed in a glass reaction container equipped with a condenser, and 307.4 g of oxalic acid dihydrate and 292.8 g of 75% phosphoric acid were further added thereto. The mixture was sufficiently stirred at 60°C for dissolution to prepare a mixed aqueous solution of oxalic acid and phosphoric acid. 82.6 g of water was placed in another container, and 124.9 g of chromium trioxide was further added thereto and dissolved to prepare a 60% aqueous solution of chromic acid. The 307.4 g of oxalic acid dihydrate is the total of amounts necessary for reducing chromium trioxide and for producing a complex chromium (III) salt.

Next, the aqueous solution of chromic acid was added to the mixed aqueous solution of oxalic acid and phosphoric acid at a speed of about 1.0 mL/min. The time of the addition was about 2 hours.

After the completion of the addition, aging was continued for 240 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 1.

### [Comparative Example 1]

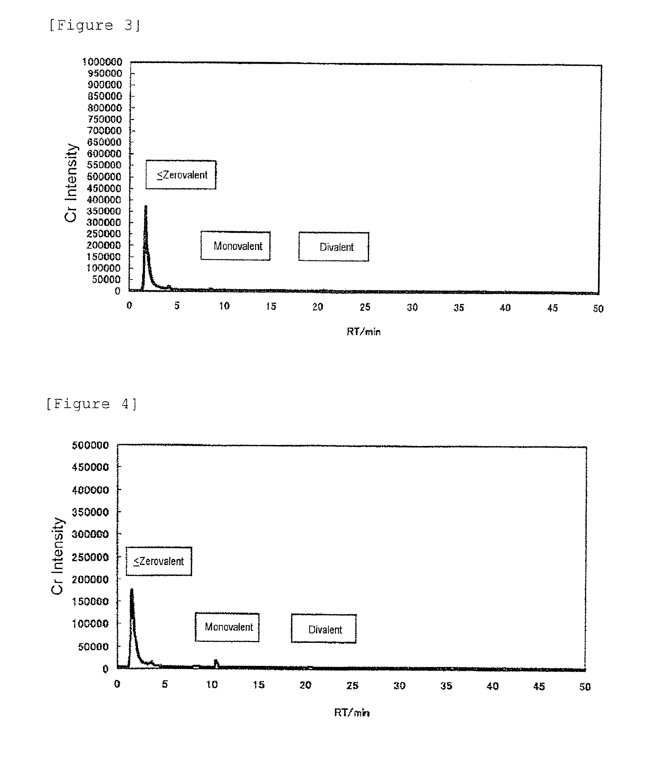

152.7 g of a 15% aqueous solution of chromium oxalate Cr₂(C₂O₄)₃, 42.8 g of oxalic acid dihydrate, and 117.4 g of water were dissolved in 687.1 g of a 40% aqueous solution of chromium phosphate Cr(H_{1.5}PO₄)₂ a prepared in advance to prepare a chromium (III)-containing aqueous solution containing a complex chromium (III) salt with the same composition as that of Examples 1, 5, and 6. The charge distribution of the obtained aqueous solution was measured. The results are shown in Figure 3.

### [Comparative Example 2]

500.8 g of a 15% aqueous solution of chromium oxalate Cr₂(C₂O₄)₃, 15.6 g of oxalic acid dihydrate, and 233.3 g of water were dissolved in 250.3 g of a 40% aqueous solution of chromium phosphate Cr(H_{1.5}PO₄)₂ prepared in advance to prepare a chromium (III)-containing aqueous solution containing a complex chromium (III) salt with the same composition as that of Example 2.

### [Comparative Example 3]

102.1 g of a 25% aqueous solution of chromium malonate Cr₂(C₃H₂O₄)₃, 35.7 g of malonic acid, and 175.1 g of water were dissolved in 687.1 g of a 40% aqueous solution of chromium phosphate Cr(H_{1.5}PO₄)₂ prepared in advance to prepare a chromium (III)-containing aqueous solution containing a complex chromium (III) salt with the same composition as that of Example 3. The charge distribution of the obtained aqueous solution was measured. The results are shown in Figure 4.

### [Comparative Example 4]

124.5 g of a 25% aqueous solution of chromium malate Cr₂(C₄H₄O₅)₃, 45.5 g of malic acid , and 142.9 g of water were dissolved in 687.1 g of a 40% aqueous solution of chromium phosphate Cr(H_{1.5}PO₄)₂ prepared an advance to prepare a chromium (III)-containing aqueous solution containing a complex chromium (III) salt with the same composition as that of Example 4.

### [Comparative Example 5]

82.6 g of water was placed in a glass reaction container equipped with a condenser, and 124.9 g of chromium trioxide was further added thereto. The mixture was sufficiently stirred and dissolved. Then, 162.7 g of 75% phosphoric acid was added thereto to prepare a mixed aqueous solution of chromic acid and phosphoric acid.

Apart from this, an aqueous solution of ethylene glycol diluted to 20% in advance by adding 92.3 g of water to 23.5 g of 98.5% ethylene glycol was added to the mixed aqueous solution of chromic acid and phosphoric acid over 2 hours for reaction. However, gelation occurred, and this made further reaction difficult.

### <Performance Evaluation>

The chromium (III)-containing aqueous solutions containing a complex chromium (III) salt, obtained in Examples 1 to 6 and Comparative Examples 1 to 4, were used for trivalent chromium chemical conversion treatment. Finished appearance was compared between the chromium (III)-containing aqueous solutions containing a complex chromium (III) salt with the same composition, obtained by the process according to the present invention and the process according to Comparative Example. In all the cases, the aqueous solution of Example was better in finish than that of Comparative Example.

The preparation of the chromium (III)-containing aqueous solutions containing a complex chromium (III) salt according to Examples is performed by adding a plurality of acids for reaction. On the other hand, the chromium (III)-containing aqueous solutions according to Comparative Examples are simply solutions obtained by mixing acids with a chromium (III)-containing aqueous solution such that the same composition as that of Examples is obtained. For example, when the charge distribution of the chromium (III)-containing aqueous solution obtained in Example 1, shown in Figure 1, is compared with the charge distribution of the chromium (III)-containing aqueous solution obtained in Comparative Example 1, shown in Figure 3, they differ in the peak intensity of zero- or lower valent chromium. Likewise, when the charge distribution of the chromium (III)-containing aqueous solution obtained in Example 3, shown in Figure 2, is compared with the charge distribution of the chromium (III)-containing aqueous solution obtained in Comparative Example 3, shown in Figure 4, they differ in the peak intensity of zero- or lower valent chromium. This suggests a difference in ligand coordinated to the chromium (III) icn. Presumably, the coordination of the added acid radicals to the chromium (III) ion is not rapidly performed in Comparative Examples. This is considered to cause the difference in the effect of trivalent chromium chemical conversion treatment.

**[Table 1]**

| | Example 1 | Example 2 | Example 3 | Example 4 | Example 5 | Example 6 |
|---|---|---|---|---|---|---|
| T. Cr (%) | 6.49 | 4.24 | 6.49 | 6.49 | 6.49 | 6.49 |
| Cr⁵⁺ | not detected | not detected | not detected | not detected | not detected | not detected |
| PO₄ (%) | 21.3 | 7.76 | 21.3 | 21.3 | 21.3 | 21.3 |
| C₂O₄ (%) | 4.60 | 6.45 | - | - | 4.60 | 4.60 |
| C₃H₂O₄ (%) | - | - | 5.34 | - | - | - |
| C₄H₄O₅ (%) | - | - | - | 6.91 | - | - |
| PO₄/Cr molar ratio | 1.8 | 1.0 | 1.8 | 1.8 | 1.8 | 1.8 |
| C₂O₄/Cr molar ratio | 0.4 | 0.9 | - | - | 0.4 | 0.4 |
| C₃H₂O₄/Cr molar ratio | - | - | 0.4 | - | - | - |
| C₄H₄O₅/Cr molar ratio | - | - | - | 0.4 | - | - |

| | | | | | | |
|---|---|---|---|---|---|---|
| Remarks) T.Cr represents the total amount of chromium contained in the aqueous solution. A PO₄ concentration represents a value of a phosphoric acid radical content indicated in terms of PO₄. A C₂O₄ concentration represents a value of an oxalic acid radical content indicated in terms of C₂O₄. A C₃H₂O₄ concentration represents a value of a malonic acid radical content indicated in terms of C₃H₂O₄. A C₄H₄O₅ concentration represents a value of a malic acid radical content indicated in terms of C₄H₄O₅. | | | | | | |

### [Example 7]

312.8 g of water was placed in a glass reaction container equipped with a condenser, and 169.8 g of chromium trioxide was further added thereto. The mixture was sufficiently stirred to prepare an aqueous solution of chromic acid.

Ethylene glycol was used as a reducing agent. 20% aqueous solution of ethylene glycol obtained by adding 37.6 g of water to 9.6 g of 98.5% ethylene glycol was added to the aqueous solution of chromic acid at a speed of about 0.8 mL/min using a metering pump. The time of the addition was about 1 hour. This 9.6 g of 98.5% ethylene glycol corresponds to an amount necessary for reducing 30% chromic acid.

After 12 minutes into the addition of the aqueous solution of ethylene glycol, the addition of 316.0 g of a 67.5% aqueous solution of nitric acid was started at a speed of about 1.3 mL/min, apart from the aqueous solution of ethylene glycol. The addition of the aqueous solution of nitric acid was continued until the completion of the addition of a mixed solution of ethylene glycol and hydrochloric acid in a second stage. The time of the addition was about 3 hours.

After the completion of the addition of the reducing agent in the first stage, 198.9 g of a mixed solution of 22.4 g of 98.5% ethylene glycol and 176.5 g of 35% hydrochloric acid was added thereto at a speed of about 1.4 mL/min. The time of the addition was about 2 hours.

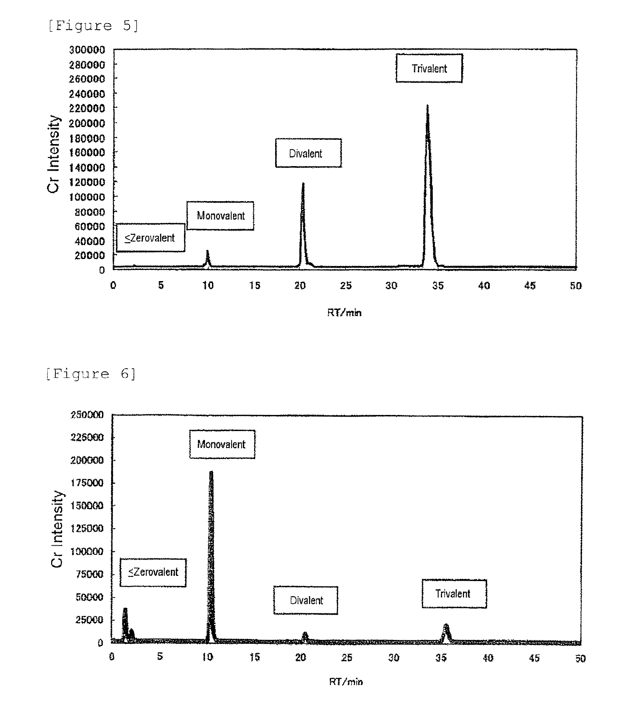

After about 12 minutes from the completion of the addition of the mixed solution of ethylene glycol and hydrochloric acid, the addition of the aqueous solution of nitric acid was also completed. Then, aging was continued for 30 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 2. Also, the charge distribution of the obtained aqueous solution was measured. The results are shown in Figure 5.

### [Example 8]

323.5 g of water was placed in a glass reaction container equipped with a condenser, and 193.0 g of chromium trioxide was further added thereto. The mixture was sufficiently stirred to prepare an aqueous solution of chromic acid. Then, 192.4 g of 98% sulfuric acid was added thereto to prepare a mixed aqueous solution of chromic acid and sulfuric acid.

Methyl alcohol was used as a reducing agent. 20% aqueous solution of methyl alcohol obtained by adding 123.0 g of water to 30.9 g of 99.5% methyl alcohol was added to the mixed aqueous solution of chromic acid and sulfuric acid at a speed of about 0.8 mL/min using a metering pump. The time of the addition was about 3 hours.

After 12 minutes into the addition of the aqueous solution of methyl alcohol, the addition of 179.6 g of a 67.5% aqueous solution of nitric acid was started at a speed of about 0.7 mL/min, apart from the aqueous solution of methyl alcohol. This addition speed is the speed at which the aqueous solution of nitric acid is added over about 3 hours, as in the time of the addition of the aqueous solution of methyl alcohol.

After about 12 minutes from the completion of the addition of the aqueous solution of methyl alcohol, the addition of the aqueous solution of nitric acid was also completed. Then, aging was continued for 30 minutes.
The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 2.

### [Example 9]

425.8 g of water was placed in a glass reaction container equipped with a condenser, and 188.8 g of chromium trioxide was further added thereto. The mixture was sufficiently stirred to prepare an aqueous solution of chromic acid. Then, 188.3 g of 98% sulfuric acid was added thereto to prepare a mixed aqueous solution of chromic acid and sulfuric acid.

Methyl alcohol was used as a reducing agent. 20% aqueous solution of methyl alcohol obtained by adding 120.3 g cf water to 30.3 g of 99.5% methyl alcohol was added to the mixed aqueous solution of chromic acid and sulfuric acid at a speed of about 0.8 mL/min using a metering pump. The time of the addition was about 3 hours.

After 12 minutes into the addition of the aqueous solution of methyl alcohol, the addition of 87.9 g of a 67.5% aqueous solution of nitric acid was started at a speed of about 0.3 mL/min, apart from the aqueous solution of methyl alcohol. This addition speed is the speed at which the aqueous solution of nitric acid is added over about 3 hours, as in the time of the addition of the aqueous solution of methyl alcohol.

After about 12 minutes from the completion of the addition of the aqueous solution of methyl alcohol, the addition of the aqueous solution of nitric acid was also completed. Then, aging was continued for 30 minutes.
The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 2.

### [Example 10]

490.6 g of water was placed in a glass reaction container equipped with a condenser, and 123.1 g of chromium trioxide was further added thereto. The mixture was sufficiently stirred to prepare an aqueous solution of chromic acid. Reaction was performed in two separate stages, the first stage of which utilized ethylene glycol as a reducing agent in the reaction and the second stage of which utilized oxalic acid as a reducing agent in the reaction. The amount of the oxalic acid added was the total of amounts necessary for producing a complex chromium (III) salt and for reducing the remaining Cr⁶⁺

In the first stage, a 20% aqueous solution of ethylene glycol obtained by adding 30.3 g of water to 7.7 g of 98.5% ethylene glycol was added to the aqueous solution of chromic acid at a speed of about 0.6 mL/min using a metering pump. The time of the addition was about 1 hour. This 7.7 g of 98.5% ethylene glycol corresponds to an amount necessary for reducing 33.3% chromic acid. After the completion of the addition of the reducing agent in the first stage, aging was continued for 30 minutes or longer. The absence of carbon dioxide production was confirmed, and the contents were transferred to another container.

Then, 179.9 g of water was placed in a glass reaction container equipped with a condenser and heated to 80°C, and 234.4 g of oxalic acid was further added thereto to prepare a 40% aqueous solution of oxalic acid. The reduction liquid of the first stage transferred to another container and 252.4 g of 35% hydrochloric acid were separately added to this 40% aqueous solution of oxalic acid at speeds of about 4.3 mL/min and about 1.8 mL/min, respectively. The time of the addition was about 2 hours. During the reaction, 199.6 g of condensed water was discharged from the system for concentration. After the completion of the addition of the reduction liquid of the first stage and hydrochloric acid, the absence of Cr⁶⁺ emission was confirmed by a diphenylcarbazide method for the completion of the reaction. The composition of the obtained chromium (III)-containing aqueous solution containing a complex chromium (III) salt is shown in Table 2. Also, the charge distribution of the obtained aqueous solution was measured. The results are shown in Figure 6.

### [Example 11]

271.2 g of water was placed in a glass reaction container equipped with a condenser, and 162.2 g of chromium trioxide was further added thereto. The mixture was sufficiently stirred to prepare an aqueous solution of chromic acid. Then, 80.8 g of 98% sulfuric acid was added thereto to prepare a mixed aqueous solution of chromic acid and sulfuric acid. Apart from this, a 30% aqueous solution of malonic acid in which 150.1 g of malonic acid was dissolved in 340.3 g of water was prepared. This amount of malonic acid is the total of amounts necessary for producing a complex chromium (III) salt and for reducing Cr⁶⁺.

Then, 490.4 g of a 30% aqueous solution of malonic acid was added to the mixed aqueous solution of chromic acid and sulfuric acid at a speed of about 2.5 mL/min using a metering pump. The time of the addition was about 3 hours.

After 12 minutes into the addition of the aqueous solution of malonic acid, the addition of 75.5 g of a 67.5% aqueous solution of nitric acid was started at a speed of about 0.3 mL/min, apart from the aqueous solution of malonic acid. This addition speed is the speed at which the aqueous solution of nitric acid is added over about 3 hours, as in the time of the addition of the aqueous solution of malonic acid.

After about 12 minutes from the completion of the addition of the aqueous solution of malonic acid, the addition of the aqueous solution of nitric acid was also completed. Then, aging was continued for 30 minutes.
The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 2.

### [Comparative Example 6]

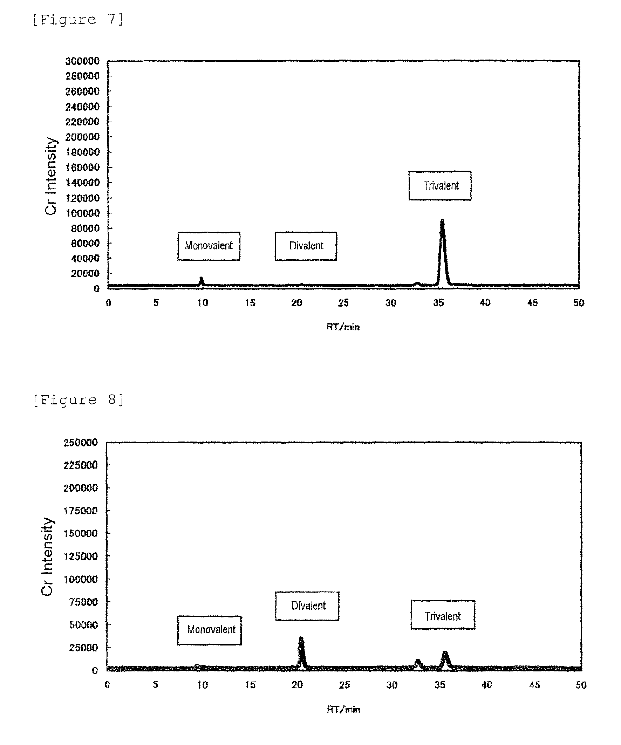

176.5 g of a 35% hydrochloric acid and 97.5 g of water were added in 726.0 g of a 45% aqueous solution of basic chromium nitrate Cr(OH)(NO₃)₂ prepared in advance to prepare a chromium (III)-containing aqueous solution containing a complex chromium (III) salt with the same composition as that of Example 7. The charge distribution of the obtained aqueous solution was measured. The results are shown in Figure 7.

### [Comparative Example 7]

179.6 g of a 67.5% nitric acid and 115.0 g of water were added in 705.4 g of a 45% aqueous solution of basic chromium sulfate Cr(OH)SO₄ prepared in advance to prepare a chromium (III)-containing aqueous solution containing a complex chromium (III) salt with the same composition as that of Example 8.

### [Comparative Example 8]

87.9 g of a 67.5% nitric acid and 221.8 g of water were added in 690.3 g of a 45% aqueous solution of basic chromium sulfate Cr(OH)SO₄ prepared in advance to prepare a chromium (III)-containing aqueous solution containing a complex chromium (III) salt with the same composition as that of Example 9.

### [Comparative Example 9]

78.1 g of oxalic acid dihydrate and 444.8 g of water were added in 477.1 g of a 36% aqueous solution of basic chromium chloride Cr(OH)Cl₂ prepared in advance to prepare a chromium (III)-containing aqueous solution containing a complex chromium (III) salt with the same composition as that of Example 10. The charge distribution of the obtained aqueous solution was measured. The results are shown in Figure 8.

### [Comparative Example 10]

296.4 g of a 45% aqueous solution of basic chromium sulfate Cr(OH)SO₄ and 265.9 g of a 45% aqueous solution of basic chromium nitrate Cr(OH)₂NO₃ prepared in advance were mixed and 85.8 g of malonic acid and 351.9 g of water were added thereto to prepare a chromium (III)-containing aqueous solution containing a complex chromium (III) salt with the same composition as that of Example 11.

### <Performance Evaluation>

The chromium (III)-containing aqueous solutions containing a complex chromium (III) salt, obtained in Examples 7 to 11 and Comparative Examples 6 to 10, were used for trivalent chromium chemical conversion treatment. Finished appearance was compared between the chromium (III)-containing aqueous solutions containing a complex chromium (III) salt with the same composition, obtained by the process according to the present invention and the process according to Comparative Example. In all the cases, the aqueous solution of Example was better in finish than that of Comparative Example.

The preparation of the chromium (III)-containing aqueous solutions containing a complex chromium (III) salt according to Examples is performed by adding a plurality of acids for reaction. On the other hand, the chromium (III)-containing aqueous solutions according to Comparative Examples are simply solutions obtained by mixing acids with a chromium (III)-containing aqueous solution such that the same composition as that of Examples is obtained. For example, when the charge distribution of the chromium (III)-containing aqueous solution obtained in Example 7, shown in Figure 5, is compared with the charge distribution of the chromium (III)-containing aqueous solution obtained in Comparative Example 6, shown in Figure 7, the peak of divalent chromium (Cr²⁺) is distinctly observed in Example 7, but hardly observed in Comparative Example 6. Also, when the charge distribution of the chromium (III)-containing aqueous solution obtained in Example 10, shown in Figure 6, is compared with the charge distribution of the chromium (III)-containing aqueous solution obtained in Comparative Example 9, shown in Figure 8, the peaks of zero- or lower valent chromium and monovalent chromium (Cr¹⁺) are distinctly observed in Example 10, but hardly observed in Comparative Example 9. This suggests a difference in ligand coordinated to the chromium (III) ion. Presumably, the coordination of the added acid radicals to the chromium (III) ion is not rapidly performed in Comparative Examples. This is considered to cause the difference in the effect of trivalent chromium chemical conversion treatment.

**[Table 2]**

| | Example 7 | Example 8 | Example 9 | Example 10 | Example 11 |
|---|---|---|---|---|---|
| T. Cr (%) | 8.81 | 10.0 | 9.79 | 6.38 | 8.40 |
| Cr⁶⁺ | not detected | not detected | not detected | not detected | not detected |
| Cl (%) | 6.00 | - | - | 8.72 | - |
| NO₃ (%) | 21.0 | 12.0 | 5.80 | - | 5.00 |
| SO₄ (%) | - | 18.5 | 18.1 | - | 7.78 |
| C₂O₄ (%) | - | - | - | 5.40 | - |
| C₃H₂O₄ (%) | - | - | - | - | 8.23 |
| Cl/Cr molar ratio | 1.0 | - | - | 2.0 | - |
| NO₃/Cr molar ratio | 2.0 | 1.0 | 0.5 | - | 0.5 |
| SO₄/Cr molar ratio | - | 1.0 | 1.0 | - | 0.5 |
| C₂O₄/Cr molar ratio | - | - | - | 0.5 | - |
| C₃H₂O₄/Cr molar ratio | - | - | - | - | 0.5 |

| | | | | | |
|---|---|---|---|---|---|
| Remarks) T.Cr represents the total amount of chromium contained in the aqueous solution. A Cl concentration represents a value of a hydrochloric acid radical content indicated in terms of Cl. A NO₃ concentration represents a value of a nitric acid radical content indicated in terms of NO₃. A SO₄ concentration represents a value of a sulfuric acid radical content indicated in terms of SO₄. A C₂O₄ concentration represents a value of an oxalic acid radical content indicated in terms of C₂O₄. A C₃H₂O₄ concentration represents a value of a malonic acid radical content indicated in terms of C₃H₂O₄. | | | | | |

### [Example 12]

175.9 g of water was placed in a glass reaction container equipped with a condenser, and 170.7 g of chromium trioxide was further added thereto. The mixture was sufficiently stirred to prepare an aqueous solution of chromic acid. Then, 222.4 g of 75% phosphoric acid was added thereto to prepare a mixed aqueous solution of chromic acid and phosphoric acid.

Ethylene glycol was used as a reducing agent. 20% aqueous solution of ethylene glycol obtained by adding 126.2 g of water to 32.1 g of 98.5% ethylene glycol was added to the mixed aqueous solution of chromic acid and phosphoric acid at a speed of about 0.9 mL/min using a metering pump. The time of the addition was about 3 hours.

After 12 minutes into the addition of the aqueous solution of ethylene glycol, the addition of 317.7 g of a 67.5% aqueous solution of nitric acid was started at a speed of about 1.3 mL/min, apart from the aqueous solution of ethylene glycol. This addition speed is the speed at which the aqueous solution of nitric acid is added over about 3 hours, as in the time of the addition of the aqueous solution of ethylene glycol.

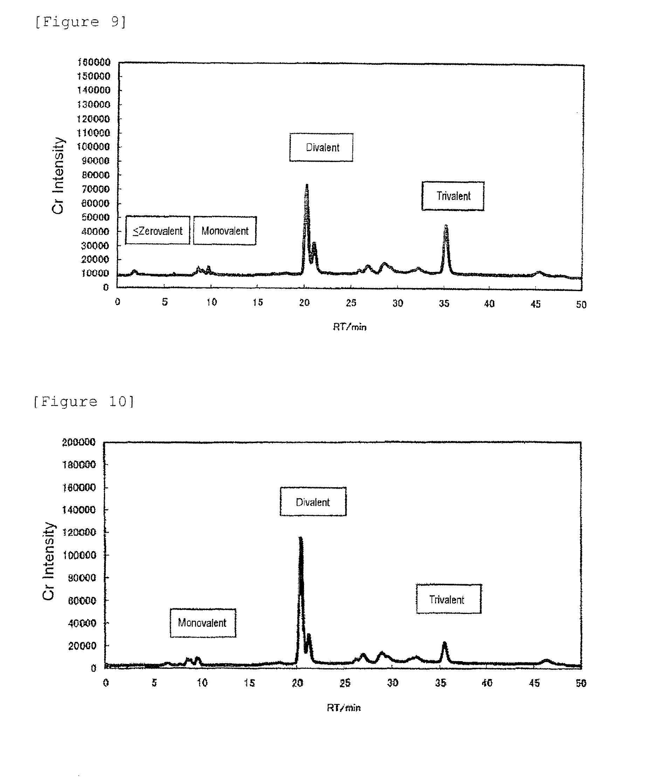

After about 12 minutes from the completion of the addition of the aqueous solution of ethylene glycol, the addition of the aqueous solution of nitric acid was also completed. Then, aging was continued for 30 minutes.
The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 3. Also, the charge distribution of the obtained aqueous solution was measured. The results are shown in Figure 9.

### [Example 13]

295.4 g of water was placed in a glass reaction container equipped with a condenser, and 181.7 g of chromium trioxide was further added thereto. The mixture was sufficiently stirred to prepare an aqueous solution of chromic acid. Then, 236.7 g of 75% phosphoric acid was added thereto and further 181.2 g of sulfuric acid was added thereto to prepare a mixed aqueous solution of chromic acid, phosphoric acid and sulfuric acid.

Methyl alcohol was used as a reducing agent. 20% aqueous solution of methyl alcohol obtained by adding 115.8 g of water to 29.1 g of 99.5% methyl alcohol was added to the mixed aqueous solution of chromic acid, phosphoric acid and sulfuric acid at a speed of about 0.8 mL/min using a metering pump. The time of the addition was about 3 hours.

After the completion of the addition of the aqueous solution of methyl alcohol, aging was continued for 30 minutes. The temperature of this aging was 105°C. After the aging, the absence of Cr⁶⁺ emission was confirmed by a diphenylcarbazide method for the completion of the reaction. The composition of the obtained chromium (III)-containing aqueous solutions containing a complex chromium (III) salt is shown in Table 3.

### [Example 14]

220.9 g of water was placed in a glass reaction container equipped with a condenser, and 222.2 g of chromium trioxide was further added thereto. The mixture was sufficiently stirred to prepare an aqueous solution of chromic acid. Then, 289.5 g of 75% phosphoric acid was added thereto to prepare a mixed aqueous solution of chromic acid and phosphoric acid.

Methyl alcohol was used as a reducing agent. 20% aqueous solution of methyl alcohol obtained by adding 42.5 g of water to 10.7 g of 99.5% methyl alcohol was added to the mixed aqueous solution of chromic acid and phosphoric acid at a speed of about 0.9 mL/min using a metering pump. The time of the addition was about 1 hour. This 10.7 g of 99.5% methyl alcohol corresponds to an amount necessary for reducing 30% chromic acid.

After the completion of the addition of the aqueous solution of methyl alcohol, 487.C g of a mixed solution of 24.9 g of 99.5% methyl alcohol and 462.1 g of 35% hydrochloric acid was added thereto at a speed of about 3.5 mL%min. The time of the addition was about 2 hours. During the reaction, 224.0 g of condensed water was discharged from the system for concentration.

After the completion of the addition of the mixed solution of methyl alcohol and hydrochloric acid, aging was continued for 30 minutes. The temperature of this aging was 105°C. After the aging, the absence of Cr⁶⁺ emission was confirmed by a diphenylcarbazide method for the completion of the reaction. The composition of the obtained chromium (III)-containing aqueous solution containing a complex chromium (III) salt is shown in Table 3. Also, the charge distribution of the obtained aqueous solution was measured. The results are shown in Figure 10.

### [Comparative Example 11]

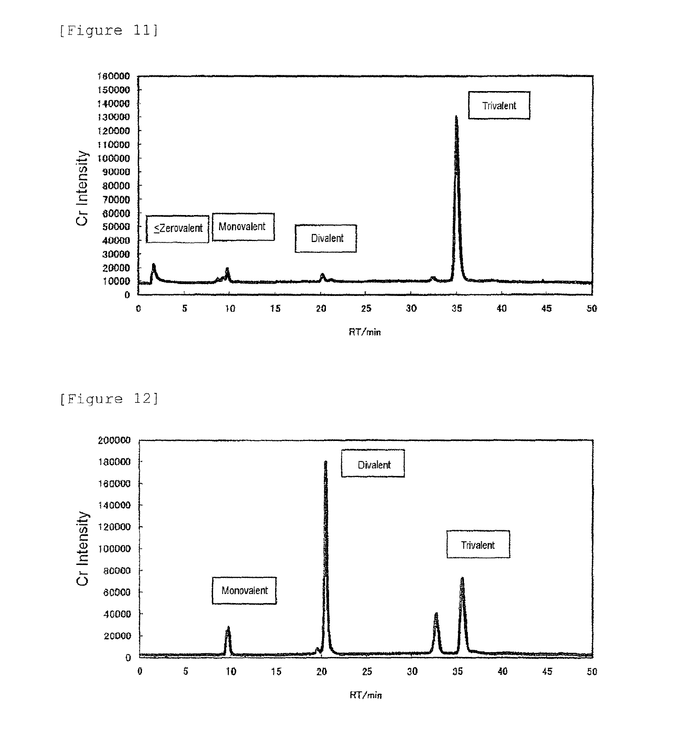

222.4 g of a 75% phosphoric acid and 47.7 g of water were added in 729.9 g of a 45% aqueous solution of basic chromium nitrate Cr(OH) (NO₃)₂ prepared in advance to prepare a chromium (III)-containing aqueous solution containing a complex chromium (III) salt with the same composition as that of Example 12. The charge distribution of the obtained aqueous solution was measured. The results are shown in Figure 11.

### [Comparative Example 12]

236.7 g of a 75% phosphoric acid and 99.1 g of water were added in 664.2 g of a 45% aqueous solution of basic chromium sulfate Cr(OH)SO₄ prepared in advance to prepare a chromium (III)-containing aqueous solution containing a complex chromium (III) salt with the same composition as that of Example 13.

### [Comparative Example 13]

289.5 g of 75% phosphoric acid and 21.3 g of water were added in 689.2 q of a 45% aqueous solution of basic chromium chloride Cr(OH)Cl₂ prepared in advance to prepare a chromium (III)-containing aqueous solution containing a complex chromium (III) salt with the same composition as that of Example 14. The charge distribution of the obtained aqueous solution was measured. The results are shown in Figure 12.

### [Comparative Example 14]

556.5 g of water was placed in a glass reaction container equipped with a condenser, and 149.5 g of chromium trioxide was further added thereto. The mixture was sufficiently stirred to prepare an aqueous solution of chromic acid. Then, 194.8 g of 75% phosphoric acid was added thereto to prepare a mixed aqueous solution of chromic acid and phosphoric acid.

Ethylene glycol was used as a reducing agent. A 20% aqueous solution of ethylene glycol obtained by adding 110.5 g of water to 28.1 g of 98.5% ethylene glycol was added to the mixed aqueous solution of chromic acid and phosphoric acid at a speed of about 0.8 mL/min using a metering pump. During the reaction, gelation occurred, and this made the reaction difficult to continue.

### <Performance Evaluation>

The chromium (III)-containing aqueous solutions containing a complex chromium (III) salt, obtained in Examples 12 to 14 and Comparative Examples 11 to 13, were used for trivalent chromium chemical conversion treatment. Finished appearance was compared between the chromium (III)-containing aqueous solutions containing a complex chromium (III) salt with the same composition, obtained by the process according to the present invention and the process according to Comparative Example. In all the cases, the aqueous solution of Example was better in finish than that of Comparative Example.

The preparation of the chromium (III)-containing aqueous solutions containing a complex chromium (III) salt according to Examples is performed by adding a plurality of acids for reaction. On the other hand, the chromium (III)-containing aqueous solutions according to Comparative Examples are simply solutions obtained by mixing acids with a chromium (III)-containing aqueous solution such that the same composition as that of Examples is obtained. For example, when the charge distribution of the chromium (III)-containing aqueous solution obtained in Example 12, shown in Figure 9, is compared with the charge distribution of the chromium (III)-containing aqueous solution obtained in Comparative Example 11, shown in Figure 11, the peak of divalent chromium (Cr²⁺) is distinctly observed in Example 12, but hardly observed in Comparative Example 11. Also, when the charge distribution of the chromium (III)-containing aqueous solution obtained in Example 14, shown in Figure 10, is compared with the charge distribution of the chromium (III)-containing aqueous solution obtained in Comparative Example 13, shown in Figure 12, the distinct peak of trivalent chromium (Cr³⁺) was observed in Comparative Example 13 in contrast to the predominant peak of divalent chromium (Cr²⁺) and the slight peak of trivalent chromium (Cr³⁺) in Example 14. This suggests a difference in ligand coordinated to the chromium (III) ion. Presumably, the coordination of the added acid radicals to the chromium (III) ion is not rapidly performed in Comparative Examples. This is considered to cause the difference in the effect of trivalent chromium chemical conversion treatment.

Thus, the chromium (III)-containing aqueous solution containing a complex chromium (III) salt according to the present invention can be suitably used for surface treatment.

**[Table 3]**

| | Example 12 | Example 13 | Example 14 |
|---|---|---|---|
| T. Cr (%) | 8.8 | 9.4 | 11.5 |
| Cr⁶⁺ | not detected | not detected | not detected |
| PO₄ (%) | 16.3 | 17.1 | 21.2 |
| Cl (%) | - | - | 15.8 |
| NO₃ (%) | 21.0 | - | - |
| SO₄ (%) | - | 17.6 | - |
| PO_{4/}Cr molar ratio | 1.0 | 1.0 | 1.0 |
| Cl/Cr molar ratio | - | - | 2.0 |
| NO₃/Cr molar ratio | 2.0 | - | - |
| SO₄/Cr molar ratio | - | 1.0 | - |

| | | | |
|---|---|---|---|
| Remarks) T.Cr represents the total amount of chromium contained in the aqueous solution. A PO₄ concentration represents a value of a phosphoric acid radical content indicated in terms of PO₄. A Cl concentration represents a value of a hydrochloric acid radical content indicated in terms of Cl. A NO₃ concentration represents a value of a nitric acid radical content indicated in terms of NO₃. A SO₄ concentration represents a value of a sulfuric acid radical content indicated in terms of SO₄. | | | |

## Claims

1. A chromium (III)-containing aqueous solution **characterized by** containing a complex chromium (III) salt which is obtained by performing chromic acid reduction reaction in the simultaneous or sequential presence of at least two or more acids selected from an inorganic acid other than chromic acid and an organic acid in an aqueous solution containing chromic acid.

2. The chromium (III)-containing aqueous solution according to claim 1, wherein the chromium (III)-containing aqueous solution contains at least a phosphoric acid radical and an organic acid radical, has a PO₄/Cr molar ratio of 3 or less, and contains substantially no hexavalent chromium, and the chromium (III)-containing aqueous solution is produced by performing chromic acid reduction reaction in the simultaneous or sequential presence of at least phosphoric acid and an organic acid.

3. The chromium (III)-containing aqueous solution according to claim 1, wherein the chromium (III)-containing aqueous solution contains a complex chromium (III) salt having two or more acid radicals bonded to the chromium atom, represented by the following composition formula (2) :
[Formula 4]
**Cr*ₖ*(OH)*₁*/(B₁*^{x₁}*)*m₁*(B₂*^{x₂}*)*m₂*··· *(B*ᵢ*^{x₁})mᵢ*** (2)
wherein B₁, B₂, ... , Bᵢ represent two or more acid radicals derived from the inorganic acid other than chromic acid and the organic acid, provided that the inorganic acid is selected from nitric acid, hydrochloric acid, and sulfuric acid; B₁, B₂, ..., Bᵢ are not the same acid radical; X₁ X₂, ..., Xᵢ represent a charge; and k, 1, m₁, m₂, ..., mi represent a real number satisfying 3k - 1 + x₁m₁ + x₂m₂ + ... + xᵢmᵢ = 0.

4. The chromium (III)-containing aqueous solution according to claim 3, wherein all the acid radicals are acid radicals derived from the inorganic acid other than chromic acid.

5. The chromium (III)-containing aqueous solution according to claim 3, wherein the acid radicals are a combination of acid radicals derived from the inorganic acid other than chromic acid and the organic acid.

6. The chromium (III)-containing aqueous solution according to claim 1, wherein the two or more acids are phosphoric acid and an inorganic acid other than phosphoric acid and chromic acid.

7. The chromium (III)-containing aqueous solution according to claim 1, **characterized in that** the chromium (III)-containing aqueous solution is used in metal surface treatment.

8. A process for producing a chromium (III)-containing aqueous solution by performing chromic acid reduction reaction by the contact of chromic acid with an acid other than chromic acid and/or an organic reducing agent in a water solvent, **characterized in that** the chromic acid reduction reaction is performed in the simultaneous or sequential presence of at least two or more acids selected as the acid other than chromic acid from an inorganic acid and an organic acid.

9. The process for producing a chromium (III)-containing aqueous solution according to claim 8, **characterized in that**, for producing a chromium (III) salt by performing chromic acid reduction reaction by the contact of chromic acid with an acid other than chromic acid and/or an organic reducing agent in a water solvent, at least phosphoric acid is used as the acid other than chromic acid, and the chromic acid reduction reaction is performed in the simultaneous or sequential presence of the phosphoric acid and an organic acid.

10. The process for producing a chromium (III)-containing aqueous solution according to claim 9, wherein the organic acid used also serves as an organic reducing agent.

11. The process for producing a chromium (III)-containing aqueous solution according to claim 9, comprising: a first step of adding phosphoric acid and an organic reducing agent in an amount of 95% or less of a stoichiometric amount necessary for reducing chromium (VI) to chromium (III) to an aqueous solution containing chromic acid for reaction to obtain an aqueous solution containing chromium phosphate; and a second step of adding an organic acid or an organic acid and an organic reducing agent to the obtained aqueous solution containing chromium phosphate to complete the chromic acid reduction reaction.

12. The process for producing a chromium (III)-containing aqueous solution according to claim 11, wherein the organic reducing agent is at least one selected from monohydric alcohol and dihydric alcohol.

13. The process for producing a chromium (III)-containing aqueous solution according to claim 11, wherein the organic acid used in the second step also serves as an organic reducing agent, and an additional organic reducing agent other than the organic acid is not used.

14. The process for producing a chromium (III)-containing aqueous solution according to claim 8, wherein, for producing a chromium (III) salt by performing chromic acid reduction reaction by the contact of chromic acid with an acid other than chromic acid and/or an organic reducing agent in a water solvent, the chromic acid reduction reaction is performed in the simultaneous or sequential presence of two or more acids selected as the acid other than chromic acid from hydrochloric acid, sulfuric acid, nitric acid, and an organic acid.

15. The process for producing a chromium (III)-containing aqueous solution according to claim 14, wherein the organic acid used also serves as an organic reducing agent.

16. The process for producing a chromium (III)-containing aqueous solution according to claim 14, wherein one or two or more inorganic acids other than chromic acid are simultaneously or sequentially added to an aqueous solution containing chromic acid; after the completion of the addition or during the addition, an organic reducing agent is added thereto for a portion of the chromic acid reduction reaction; and then, an organic acid or an organic acid and an organic reducing agent are added thereto to complete the chromic acid reduction reaction.

17. The process for producing a chromium (III)-containing aqueous solution according to claim 14, wherein one or two or more inorganic acids are simultaneously or sequentially added to an aqueous solution containing chromic acid, and after the completion of the addition or during the addition, an organic acid also serving as an organic reducing agent is added thereto to complete the chromic acid reduction reaction.

18. The process for producing a chromium (III)-containing aqueous solution according to claim 14, wherein an organic reducing agent is added to an aqueous solution containing chromic acid to reduce a portion of the chromic acid in advance, and the resulting solution and hydrochloric acid and/or sulfuric acid are added to a solution containing an organic acid also serving as an organic reducing agent to complete the chromic acid reduction reaction.

19. The process for producing a chromium (III)-containing aqueous solution according to claim 14, wherein the organic reducing agent is at least one selected from monohydric alcohol and dihydric alcohol.

20. The process for producing a chromium (III)-containing aqueous solution according to claim 8, wherein, for producing a chromium (III) salt by performing chromic acid reduction reaction by the contact of chromic acid with an acid other than chromic acid and an organic reducing agent in a water solvent, the chromic acid reduction reaction is performed in the simultaneous or sequential presence of phosphoric acid and one or two or more acids other than phosphoric acid selected from hydrochloric acid, nitric acid, and sulfuric acid.

21. The process for producing a chromium (III)-containing aqueous solution according to claim 20, wherein the contact with the hydrochloric acid is performed by adding, to a water solvent containing chromic acid, a liquid mixture in which at least the hydrochloric acid and the organic reducing agent are mixed.

22. The process for producing a chromium (III)-containing aqueous solution according to claim 20, wherein the contact with the nitric acid is performed by simultaneously and separately adding at least the nitric acid and the organic reducing agent to a water solvent containing chromic acid.

23. The process for producing a chromium (III)-containing aqueous solution according to claim 20, wherein the organic reducing agent is at least one selected from monohydric alcohol and dihydric alcohol.
